# EUROPÄISCHE PATENTSCHRIFT

(11) **EP 3 754 447 B1**
(45) Veröffentlichungstag und Bekanntmachung des Hinweises auf die Patenterteilung: **20.12.2023**
(21) Anmeldenummer: 20179996.2
(22) Anmeldetag: 15.06.2020
(51) Int. Cl.: G05B 23/02, B29C 45/76

(54) **VORRICHTUNG UND VERFAHREN ZUM VISUALISIEREN ODER BEURTEILEN EINES PROZESSZUSTANDES**
DEVICE AND METHOD FOR VISUALISING OR ASSESSING A PROCESS STATE
DISPOSITIF ET PROCÉDÉ DE VISUALISATION OU D'ÉVALUATION D'UN ÉTAT DE PROCESSUS

(30) Priorität: 19.06.2019 AT 505512019
(43) Veröffentlichungstag der Anmeldung: 23.12.2020
(73) Patentinhaber: ENGEL AUSTRIA GmbH, 4311 Schwertberg (AT)
(72) Erfinder: GIESSAUF, Josef, 4320 Perg (AT); KOPPAUER, Herwig, 4040 Linz (AT)
(74) Vertreter: Torggler & Hofmann Patentanwälte - Innsbruck

(56) Entgegenhaltungen:
- EP-A2- 0 401 816
- DE-A1-102004 052 499
- US-A- 4 658 370

## Beschreibung

Die Erfindung betrifft eine Vorrichtung zur Überwachung einer Produktionsanlage mit den Merkmalen des Oberbegriffs des Anspruchs 1 sowie eine Produktionsanlage mit einer solchen Vorrichtung. Weiters betrifft die Erfindung ein Computerprogrammprodukt. Schließlich betrifft die Erfindung ein Verfahren zum Überwachen einer in Formgebungszyklen arbeitenden Formgebungsmaschine und ggf. wenigstens ein Peripheriegerät enthaltenden Produktionsanlage.

Eine gattungsgemäße Vorrichtung geht aus DE 10 2007 013 044 B4 hervor, welche bei Überschreitung eines Schwellenwertes durch einen Stabilitätsparameter ein Warnsignal an einer Anzeigeeinrichtung anzeigt.

Eine weitere gattungsgemäße Vorrichtung geht auch aus DE 10 2004 052 499 A1 hervor, welche einen Algorithmus verwendet, welcher bei Überschreitung eines Ist-Parameterwerts des dazugehörigen Grenzwerts eine Nachricht generiert, die Auskunft über einen Prozesszustand gibt.

Eine weitere gattungsgemäße Vorrichtung geht aus US 2010/0295199 A1 hervor, welche einen Energieverbrauch und/oder eine Schmelzqualität verbessert, wobei der Schmelze zugeordnete aktuelle Prozessparameter mit eingestellten Werten verglichen werden. Bei einer bestimmten Abweichung werden die Maschineneinstellparameter angepasst, um den Energieverbrauch zu optimieren oder die Schmelzqualität zu verbessern. An einem Bildschirm werden die Prozessparameter angezeigt.

Ein Expertensystem unter Verwendung einer künstlichen Intelligenz ist der US 4,658,370 A zu entnehmen, wobei die künstliche Intelligenz basierend auf heuristischen Annahmen sukzessive beispielsweise eine Diagnose in Bezug auf eine Autoreparatur bereitstellt.

Eine Produktionsanlage mit einer Möglichkeit zur Visualisierung von Prozesszuständen ist aus der EP 0 401 816 A2 bekannt, wobei die Visualisierung zur Fehlerminimierung und Diagnose herangezogen werden kann. In Bezug auf Prozesszustände generierte Daten können an der Produktionsanlage angezeigt werden.

Im Rahmen der vorliegenden Offenbarung ist der Terminus Prozesszustand im Kontext einer Produktionsanlage abhängig vom Status der Parameter, welche direkt und/oder indirekt am Fertigungsprozess teilnehmen und spiegelt die Situation der Produktionsanlage bezüglich wenigstens eines Parameters während des in Formgebungszyklen verlaufenden Fertigungsprozesses wider. Der Terminus Prozesszustand kann sich nur auf die Formgebungsmaschine der Produktionsanlage, nur auf das ggf. vorhandene wenigstens eine Peripheriegerät oder auf die Gesamtheit von Formgebungsanlage und wenigstens einem Peripheriegerät beziehen. Im Rahmen der vorliegenden Offenbarung kann jeder Verweis auf eine Produktionsanlage als Verweis nur auf die Formgebungsmaschine der Produktionsanlage, nur auf das ggf. vorhandene wenigstens eine Peripheriegerät oder auf die Gesamtheit von Formgebungsanlage und wenigstens einem Peripheriegerät verstanden werden.

Der Prozesszustand im Sinne der Erfindung umfasst z. B.:
- die Güte der Prozesseinstellung: Sollwerte sind so gewählt, dass
   - der Prozess robust gegenüber Umgebungseinflüssen ist
   - sie auch tatsächlich erreicht werden oder erreicht werden können
   - sie im Hinblick auf das verarbeitete Material geeignet sind
- den Zustand von Elementen der Produktionsanlage (z.B. der Rückstromsperre, des Werkzeugs, etc.)
- den Zustand des verarbeiteten Materials
- den Einfluss von ungemessenen Störgrößen (z.B. Umgebungstemperatur, Zugluft, etc.).

Nachteilig am Stand der Technik ist, dass die bekannten Algorithmen für die Ermittlung des Prozesszustandes eine beschränkte Anzahl an Parametern heranziehen und keine Möglichkeit zur Berechnung komplexer Zusammenhänge von Prozesszuständen und den damit verbundenen Parametern gewährleisten, sowie nur begrenzt Rückschlüsse auf die Ursachen der Prozesszustände ermöglichen.

Aufgabe der Erfindung ist die Bereitstellung einer gattungsgemäßen Vorrichtung, Produktionsanlage und eines Computerprogrammprodukts sowie eines gattungsgemäßen Verfahrens zur Überwachung, bei welchen die oben diskutierten Probleme behoben werden.

Diese Aufgabe wird durch eine Vorrichtung mit den Merkmalen des Anspruchs 1, einer Produktionsanlage mit den Merkmalen des Anspruchs 19, ein Computerprogrammprodukt mit den Merkmalen des Anspruchs 20 und einem Verfahren mit den Merkmalen des Anspruchs 21 gelöst. Vorteilhafte Ausführungsformen der Erfindung sind in den abhängigen Ansprüchen definiert.

Weil in einer Speichereinheit, welche mit der Recheneinheit in einer Datenverbindung steht oder in eine solche bringbar ist
- in Bezug auf wenigstens einen Prozessgrößensatz, umfassend wenigstens zwei verschiedene Prozessgrößen der Produktionsanlage oder wenigstens eine Prozessgröße mit wenigstens einer abgeleiteten Größe, jeweils wenigstens drei mögliche Prozesszustände der Produktionsanlage abgelegt sind und in Bezug auf jeden Prozessgrößensatz zumindest ein Algorithmus abgelegt ist, durch welchen unter Verwendung von Ist-Werten wenigstens zweier Prozessgrößen oder eines Ist-Werts wenigstens einer Prozessgröße und eines Ist-Werts wenigstens einer abgeleiteten Größe und wenigstens eines zusätzlichen Parameters, welcher vom Ist-Wert der jeweiligen Prozessgröße und vom Ist-Wert der jeweiligen abgeleiteten Größe verschieden ist, berechenbar ist, welcher der in Bezug auf den jeweiligen Prozessgrößensatz verschiedenen möglichen Prozesszustände tatsächlich vorliegt
- die in Bezug auf den jeweiligen Prozessgrößensatz verschiedenen möglichen Prozesszustände dahingehend klassifiziert sind, ob Maßnahmen, welche eine Veränderung zumindest einer Prozessgröße und/oder zumindest einer abgeleiteten Größe bewirken, notwendig oder empfohlen sind, wobei in Bezug auf jeden Prozessgrößensatz zumindest ein Prozesszustand so klassifiziert ist, dass keine Maßnahmen notwendig oder empfohlen sind und zumindest ein Prozesszustand so klassifiziert ist, dass Maßnahmen notwendig oder empfohlen sind
- die Befehle bei der Ausführung des Computerprogramms durch die Recheneinheit diese dazu veranlassen
   ▪ in Bezug auf den jeweiligen Prozessgrößensatzes den zugehörigen zumindest einen Algorithmus auszuführen und so unter Berücksichtigung der Ist-Werte der wenigstens zwei Prozessgrößen oder des Ist-Werts der wenigstens einen Prozessgröße und des Ist-Werts der jeweiligen abgeleiteten Größe und des wenigstens einen zusätzlichen Parameters zu berechnen, welcher der in Bezug auf den jeweiligen Prozessgrößensatz verschiedenen möglichen Prozesszustände tatsächlich vorliegt und
   ▪ zu überprüfen, ob der tatsächlich vorliegende Prozesszustand als ein solcher Prozesszustand klassifiziert ist, für welchen eine Maßnahme, welche eine Veränderung des jeweiligen Prozessgrößensatzes bewirkt, notwendig oder empfohlen ist,
   ▪ für den Fall, dass in Bezug auf den tatsächlich vorliegenden Prozesszustand aufgrund seiner Klassifikation eine Maßnahme notwendig oder empfohlen ist, in Abhängigkeit des berechneten Prozesszustandes eine elektronische Nachricht zu erstellen und mittels der Ausgabevorrichtung auszugeben, wobei bevorzugt vorgesehen ist, dass die elektronische Nachricht eine Information beinhaltet, welcher der in Bezug auf den Prozessgrößensatz verschiedenen möglichen Prozesszustände tatsächlich vorliegt,
wobei die wenigstens eine abgeleitete Größe aus den Ist-Werten wenigstens einer Prozessgröße eines aktuellen Formgebungszyklus und/oder vergangener Formgebungszyklen und ggf. des wenigstens einen zusätzlichen Parameters berechnet wird und/oder sich der Ist-Wert der wenigstens einen Prozessgröße auf einen aktuellen Formgebungszyklus und/oder einen vergangenen Formgebungszyklus bezieht, wird es erst ermöglicht, unter Berücksichtigung des wenigstens einen Prozessgrößensatzes und des zumindest einen zugrundeliegenden Algorithmus zumindest einen tatsächlich vorliegenden Prozesszustand derart zu klassifizieren, dass Maßnahmen in Bezug auf den zumindest einen Prozesszustand aufgezeigt werden können und Informationen zum tatsächlich vorliegenden Prozesszustand ausgegeben werden.

Die Erstellung der erforderlichen Algorithmen kann von Experten des Herstellers der Produktionsanlage unter Verwendung ihres Fachwissens und ggf. unter Heranziehung des Ergebnisses von Versuchen, Simulationen und/oder Berechnungen erfolgen oder durch Einsatz einer künstlichen Intelligenz.

Im Allgemeinen ist jedem Formgebungszyklus ein Prozessgrößensatz (genauer: dessen Ist-Werte) zugeordnet.

Der Begriff "Prozessgrößensatz" ist als Kurzbezeichnung für "wenigstens zwei verschiedene Prozessgrößen der Produktionsanlage oder wenigstens eine Prozessgröße mit wenigstens einer abgeleiteten Größe" zu verstehen und muss nicht als identifizierbarer Datensatz vorliegen. Dies gilt für die gesamte Offenbarung.

Die Ermittlung der erforderlichen Ist-Werte, ggf. der wenigstens einen abgeleiteten Größe und die Ausführung des Algorithmus erfolgt bevorzugt in Bezug auf einen Formgebungszyklus, besonders bevorzugt in Bezug auf alle Formgebungszyklen oder in Bezug auf ausgewählte Formgebungszyklen.

Dem Benutzer der Vorrichtung, des Computerprogrammprodukts und des Verfahrens wird der tatsächlich vorliegende Prozesszustand über die Information der elektrischen Nachricht in einer Form angezeigt, in der der Benutzer die zugrundeliegenden Parameter des Prozessgrößensatzes nicht berücksichtigen muss. Der Benutzer erkennt kompakt dargestellt auf einen Blick, welcher Prozesszustand tatsächlich vorliegt, ohne eine Interpretation von Prozessgrößen, abgeleitete Größen, Ist-Werten oder zusätzlichen Größen anstellen zu müssen.

Die elektronische Nachricht kann potenzielle Erklärungen oder Handlungsanweisungen für den Benutzer beinhalten. Bei der Erstellung der Handlungsanweisungen kann die Erfindung auch potenzielle Auswirkungen einer Änderung der Prozesseinstellung auf relevante Prozessparameter, wie z. B. Zykluszeit, berücksichtigen und primär solche Handlungsanweisungen geben, die keinen Einfluss auf relevante Prozessparameter haben.

Weiters wird bei der Ausführung des Computerprogrammes (bevorzugt in jedem Formgebungszyklus oder nur in ausgewählten Formgebungszyklen) die Berechnung und Klassifikation des tatsächlich vorliegenden Prozesszustandes sowie die Erstellung einer elektronischen Nachricht zu der Klassifikation des wenigstens einen tatsächlich vorliegenden Prozesszustandes ermöglicht.

Vorteilhaft ist hierbei, dass der wenigstens eine Prozessgrößensatz durch den zumindest einen Algorithmus derart beschrieben ist, dass komplexe Zusammenhänge der wenigstens zwei verschiedenen Prozessgrößen der Produktionsanlage und/oder der wenigstens einen Prozessgröße mit wenigstens einer abgeleiteten Größe überwachbar sind und/oder mit dem Ist-Wert der jeweiligen Prozessgröße in Verbindung gebracht werden.

Dadurch kann nicht erst beim Übertreten eines Schwellwertes eine elektronische Nachricht generiert werden, sondern die Vorrichtung bietet die Möglichkeit, den Prozessgrößensatz durch einen Prozesszustand zu beschreiben und Auskunft über diesen Prozesszustand zu geben.

Durch die Produktionsanlage mit einer in Formgebungszyklen arbeitenden Formgebungsmaschine und einer Vorrichtung zur Überwachung liegen dem Benutzer somit detaillierte Informationen zu den Prozesszuständen und den damit verbundenen Prozessgrößen und/oder abgeleiteten Größen vor.

Weiters können dem Benutzer Informationen zu zusätzlichen Parametern, Ist-Werten der Prozessgrößen und/oder der abgeleiteten Größen sowie Ereignissen aufbereitet werden.

Weil das Computerprogrammprodukt Befehle umfasst, die bei der Ausführung durch eine Recheneinheit einer eine in Formgebungszyklen arbeitenden Formgebungsmaschine und ggf. wenigstens ein Peripheriegerät enthaltenden Produktionsanlage diese veranlassen (bevorzugt in jedem Formgebungszyklus oder nur in ausgewählten Formgebungszyklen)
- aus einer Speichereinheit, welche mit der Recheneinheit in einer Datenverbindung steht oder in eine solche bringbar ist, in Bezug auf wenigstens einen Prozessgrößensatz der Produktionsanlage jeweils wenigstens drei mögliche Prozesszustände der Produktionsanlage abzurufen und in Bezug auf jeden Prozessgrößensatz den zumindest einen Algorithmus abzurufen, durch welchen unter Verwendung von Ist-Werten wenigstens zweier Prozessgrößen oder eines Ist-Werts wenigstens einer Prozessgröße und eines Ist-Werts wenigstens einer abgeleiteten Größe und wenigstens eines zusätzlichen Parameters, welcher vom Ist-Wert der jeweiligen Prozessgröße und vom Ist-Wert der jeweiligen abgeleiteten Größe verschieden ist, berechenbar ist, welcher der in Bezug auf den jeweiligen Prozessgrößensatz verschiedenen möglichen Prozesszustände tatsächlich vorliegt, wobei die in Bezug auf den jeweiligen Prozessgrößensatz verschiedenen möglichen Prozesszustände dahingehend klassifiziert sind, ob Maßnahmen, welche eine Veränderung der jeweiligen Prozessgröße und/oder abgeleiteten Größe bewirken, notwendig oder empfohlen sind, wobei in Bezug auf jeden Prozessgrößensatz zumindest ein Prozesszustand so klassifiziert ist, dass keine Maßnahmen notwendig oder empfohlen sind und zumindest ein Prozesszustand so klassifiziert ist, dass Maßnahmen notwendig oder empfohlen sind
- die wenigstens eine abgeleitete Größe aus den Ist-Werten wenigstens einer Prozessgröße eines aktuellen Formgebungszyklus und/oder vergangener Formgebungszyklen und ggf. des wenigstens einen zusätzlichen Parameters zu berechnen und/oder den Ist-Wert der wenigstens einen Prozessgröße auf einen aktuellen Formgebungszyklus und/oder einen vergangenen Formgebungszyklus zu beziehen
- in Bezug auf wenigstens einen Prozessgrößensatzes den zugehörigen zumindest einen Algorithmus auszuführen und so unter Berücksichtigung der Ist-Werte der wenigstens zwei Prozessgrößen oder des Ist-Werts der wenigstens einen Prozessgröße und des Ist-Werts der wenigstens einen abgeleiteten Größe und wenigstens eines zusätzlichen Parameters zu berechnen, welcher der in Bezug auf den jeweiligen Prozessgrößensatz verschiedenen möglichen Prozesszustände tatsächlich vorliegt und
- zu überprüfen, ob der tatsächlich vorliegende Prozesszustand als ein solcher Prozesszustand klassifiziert ist, für welchen eine Maßnahme, welche eine Veränderung der jeweiligen Prozessgröße und/oder abgeleiteten Größe bewirkt, notwendig oder empfohlen ist,
- für den Fall, dass in Bezug auf den tatsächlich vorliegenden Prozesszustand aufgrund seiner Klassifikation eine Maßnahme notwendig oder empfohlen ist, in Abhängigkeit des berechneten Prozesszustandes eine elektronische Nachricht zu erstellen und mittels der Ausgabevorrichtung auszugeben, wobei bevorzugt vorgesehen ist, dass die elektronische Nachricht eine Information beinhaltet, welche der in Bezug auf den Prozessgrößensatzverschiedenen möglichen Prozesszustände tatsächlich vorliegt,
werden für den Benutzer komfortabel die notwendigen Informationen automatisch aus der Speichereinheit für die Berechnung verwendet und derart aufbereitet, dass die daraus resultierenden Daten für den Benutzer in einer Form dargestellt werden können, dass eine Zeitersparnis in der Analyse und Manipulation von Prozesszuständen gewährleistet wird.

In Bezug auf das Verfahren zum Überwachen ist erfindungsgemäß vorgesehen, dass mittels einer Recheneinheit
- in Bezug auf wenigstens einen Prozessgrößensatz der Produktionsanlage unter Berücksichtigung von Ist-Werten wenigstens zweier Prozessgrößen oder eines Ist-Werts wenigstens einer Prozessgröße und eines Ist-Werts wenigstens einer abgeleiteten Größe und wenigstens eines zusätzlichen Parameters berechnet wird, welcher der in Bezug auf den jeweiligen Prozessgrößensatz verschiedenen möglichen Prozesszustände tatsächlich vorliegt, wobei die wenigstens eine abgeleitete Größe aus den Ist-Werten wenigstens einer Prozessgröße eines aktuellen Formgebungszyklus und/oder vergangener Formgebungszyklen und ggf. des wenigstens einen zusätzlichen Parameters berechnet wird und/oder der Ist-Wert der wenigstens einen Prozessgröße auf einen aktuellen Formgebungszyklus und/oder einen vergangenen Formgebungszyklus bezogen wird, und
- überprüft wird, ob der tatsächlich vorliegende Prozesszustand als ein solcher Prozesszustand klassifiziert ist, für welchen eine Maßnahme, welche eine Veränderung der jeweiligen Prozessgröße und/oder abgeleiteten Größe bewirkt, notwendig oder empfohlen ist,
- für den Fall, dass in Bezug auf den tatsächlich vorliegenden Prozesszustand aufgrund seiner Klassifikation eine Maßnahme notwendig oder empfohlen ist, in Abhängigkeit des berechneten Prozesszustandes eine elektronische Nachricht zu erstellen und mittels der Ausgabevorrichtung auszugeben, wobei bevorzugt vorgesehen ist, dass die elektronische Nachricht eine Information beinhaltet, welcher der in Bezug auf den Prozessgrößensatz verschiedenen möglichen Prozesszustände tatsächlich vorliegt.

Dadurch wird es ermöglicht, dass durch die Rücksichtnahme des Ist-Werts der jeweiligen Prozessgröße und/oder des Ist-Werts der jeweiligen abgeleiteten Größe des Prozessgrößensatzes der tatsächlich vorliegende Prozesszustand ermittelt wird.

Zudem wird eine Überprüfung der Klassifikation sowie eine Informationsweitergabe an den Benutzer der Vorrichtung gewährleistet.

Ganz allgemein gilt, dass nicht jeder Prozessgröße und/oder abgeleiteten Größe ein Prozesszustand zugewiesen sein muss.

Bei einem Ausführungsbeispiel der Erfindung ist vorgesehen, dass die elektronische Nachricht eine Information beinhaltet:
- welche Maßnahme notwendig oder empfohlen ist und/oder
- welcher der in Bezug auf den Prozessgrößensatz verschiedenen möglichen Prozesszustände tatsächlich vorliegt.

Dadurch wird es ermöglicht, dem Benutzer beispielsweise mitzuteilen, wie auf den wenigstens einen tatsächlich vorliegenden Prozesszustand eingewirkt werden kann.

Die Maßnahmen beziehen sich auf den wenigstens einen tatsächlich vorliegenden Prozesszustand und geben Informationen zur Manipulation des wenigstens einen tatsächlich vorliegenden Prozesszustandes.

Eine elektronische Nachricht ermöglicht eine Visualisierung der Daten und bietet durch die Aufbereitung der Daten eine benutzerfreundliche Handhabung der Vorrichtung, da erkennbar ist, welcher Prozesszustand tatsächlich vorliegt und ggf. welche Maßnahmen zu setzen sind.

Durch die Visualisierung werden die Informationen des Berechnungsschrittes derart aufbereitet, dass dem Benutzer klar ersichtlich ist, welcher Prozesszustand vorliegt und mit welchen Maßnahmen auf diesen Prozesszustand eingewirkt werden kann. Die elektronische Nachricht kann in einem Ausführungsbeispiel an hinterlegte Adressen (z. B. E-Mail-Adressen) übermittelt werden.

Die elektronische Nachricht kann in einem Ausführungsbeispiel eine automatische Reaktion einer Maschinensteuerung der Produktionsanlage, z. B. eine automatische Änderung von Sollwerten von Prozessgrößen oder eine Produktionsunterbrechung, bewirken.

Die elektronische Nachricht kann in einem Ausführungsbeispiel zumindest einen Link beinhalten, über welchen der Benutzer zu einer Bildschirmseite der Ausgabevorrichtung gelangt oder zu einem Eingabefeld für einen Sollwert, wo eine Behebung eines erkannten Problems möglich ist.

Die elektronische Nachricht kann in einem Ausführungsbeispiel für eine spätere Rückverfolgung gespeichert werden.

Die elektronische Nachricht kann in einem Ausführungsbeispiel an wenigstens eine andere Produktionsanlage übermittelt werden und bei der wenigstens einen anderen Produktionsanlage dazu verwendet werden, präventiv einen ungünstigen Zustand zu vermeiden.

Bei einem Ausführungsbeispiel der Erfindung ist vorgesehen, dass wenigstens ein zusätzlicher Parameter und/oder wenigstens eine Prozessgröße und/oder wenigstens eine abgeleitete Größe aus zumindest einem vorangegangenen Formgebungszyklus für die Ausführung des zumindest einen Algorithmus heranziehbar ist.

Dadurch wird es ermöglicht, einen zeitlichen Verlauf des wenigstens einen zusätzlichen Parameters und/oder der wenigstens einen Prozessgröße und/oder der wenigstens einen abgeleiteten Größe zu berücksichtigen und/oder aufzubereiten.

Dieser zeitliche Verlauf wird gemäß diesem Ausführungsbeispiel für die Berechnung des wenigstens einen Prozesszustandes herangezogen, um eine präzisere Klassifizierung und/oder Diagnose des tatsächlich vorliegenden Prozesszustandes zu ermöglichen.

Bei einem Ausführungsbeispiel der Erfindung ist vorgesehen, dass der wenigstens eine Prozesszustand und/oder eine Änderung des wenigstens einen Prozesszustandes in Form der elektronischen Nachricht angezeigt wird.

Dadurch wird es ermöglicht, dass der Benutzer der Vorrichtung spezifische Informationen zum wenigstens einen Prozesszustand und/oder zu der Änderung des wenigstens einen Prozesszustandes erhält.

Bei einem Ausführungsbeispiel der Erfindung ist vorgesehen, dass zur Berechnung des tatsächlich vorliegenden Prozesszustandes und/oder der Klassifikation des tatsächlich vorliegenden Prozesszustandes wenigstens zwei Algorithmen parallel heranziehbar sind.

Dadurch wird es ermöglicht, dass die Berechnung und/oder Klassifikation des tatsächlich vorliegenden Prozesszustandes einerseits verlässlicher aufgrund zusätzlicher Informationen des wenigstens einen weiteren Algorithmus ist und/oder andererseits gewährleistet wird, dass wenigstens ein Algorithmus den Prozessgrößensatz in Bezug auf den wenigstens einen tatsächlich vorliegenden Prozesszustand optimaler abbildet.

Bei einem Ausführungsbeispiel der Erfindung ist vorgesehen, dass für den Fall, dass in Bezug auf den tatsächlich vorliegenden Prozesszustand aufgrund seiner Klassifikation keine Maßnahme notwendig oder empfohlen ist, die Befehle bei der Ausführung des Computerprogramms durch die Recheneinheit diese dazu veranlassen, entweder keine Nachricht auszugeben oder eine elektronische Nachricht zu erstellen und mittels der Ausgabevorrichtung auszugeben, wobei die elektronische Nachricht eine Information beinhaltet, welcher der in Bezug auf einen Prozessgrößensatz verschiedenen möglichen Prozesszustände tatsächlich vorliegt und/oder eine Information, dass keine Maßnahme notwendig oder empfohlen ist.

Dadurch wird es ermöglicht, dass der Benutzer nicht mit Informationen überlastet wird, welche den Benutzer von der Handhabung der Vorrichtung ablenken können.

Es wird auch ermöglicht, dem Benutzer der Vorrichtung eine Absicherung in Form einer elektronischen Nachricht zu präsentieren, die klarstellt, dass der wenigstens eine tatsächlich vorliegende Prozesszustand keine nötigen Maßnahmen seitens des Benutzers bedarf.

Bei einem Ausführungsbeispiel der Erfindung ist vorgesehen, dass sich wenigstens ein zusätzlicher Parameter auf einen Ist-Wert der zugehörigen Prozessgröße und/oder auf einen Ist-Wert der zugehörigen abgeleiteten Größe aus zumindest einem vorangegangenen Formgebungszyklus der Formgebungsmaschine bezieht, wobei vorzugsweise vorgesehen ist, dass aus einer Vielzahl von Ist-Werten der zugehörigen Prozessgröße und/oder aus einer Vielzahl von Ist-Werten der zugehörigen abgeleiteten Größe aus einer Vielzahl von vorangegangenen Formgebungszyklen ein historischer Verlauf des Ist-Werts der zugehörigen Prozessgröße und/oder des Ist-Werts der zugehörigen abgeleiteten Größe berechnet wird.

Dadurch wird es ermöglicht, dass der wenigstens eine zusätzliche Parameter Informationen aus vorangegangenen Formgebungszyklen inkludiert und/oder bereits an vorangegangene Formgebungszyklen angepasst ist.

Vorteilhafter Weise ist damit wenigstens ein zusätzlicher Parameter gegeben, der aufgrund der Informationen zu den Größen aus den vorangegangenen Formgebungszyklen optimal an den zu betrachtenden Formgebungszyklus adjustiert ist.

Durch den historischen Verlauf des Ist-Wertes der zugehörigen Prozessgröße wird ein zeitlicher Ablauf der Änderungen des Ist-Wertes der zugehörigen Prozessgröße und/oder abgeleiteten Größe berechnet.

Eine Abfolge von verschiedenen Ist-Werten der zugehörigen Prozessgröße ist durch die Informationen zu den vorangegangenen Formgebungszyklen visualisierbar.

Bei einem Ausführungsbeispiel der Erfindung ist vorgesehen, dass wenigstens ein zusätzlicher Parameter aus nachstehender Liste ausgewählt ist (eine beliebige Kombination ist möglich):
- ein Soll-Wert zumindest einer Prozessgröße, ggf. jener Prozessgröße, in Bezug auf welche der tatsächlich vorliegende Prozesszustand zu berechnen ist
- ein Soll-Wert zumindest einer abgeleiteten Größe, ggf. jener abgeleiteten Größe, in Bezug auf welche der tatsächlich vorliegende Prozesszustand zu berechnen ist
- ein Ist-Wert zumindest einer Prozessgröße aus zumindest einem vorangegangenen Zyklus
- ein Ist-Wert einer abgeleiteten Größe aus zumindest einem vorangegangenen Zyklus
- ein Referenz-Wert zumindest einer Prozessgröße, ggf. jener Prozessgröße, in Bezug auf welche der tatsächlich vorliegende Prozesszustand zu berechnen ist
- ein Referenz -Wert zumindest einer abgeleiteten Größe, ggf. jener abgeleiteten Größe, in Bezug auf welche der tatsächlich vorliegende Prozesszustand zu berechnen ist ein Toleranzbereich zumindest einer Prozessgröße, ggf. jener Prozessgröße, in Bezug auf welche der tatsächlich vorliegende Prozesszustand zu berechnen ist
- ein Toleranzbereich zumindest einer abgeleiteten Größe, ggf. jener abgeleiteten Größe, in Bezug auf welche der tatsächlich vorliegende Prozesszustand zu berechnen ist
- eine Hilfsvariable, vorzugsweise eine Zählvariable
- ein Geometrieparameter der Produktionsanlage
- ein Geometrieparameter der Formgebungsmaschine und/oder ggf. des wenigstens einen Peripheriegeräts
- komponentenspezifische Parameter der Formgebungsmaschine und/oder ggf. des wenigstens einen Peripheriegeräts
- Leistungsdaten der Formgebungsmaschine und/oder ggf. des wenigstens einen Peripheriegeräts
- Parameter eines Rohmaterials.

Dadurch wird es ermöglicht, dass der wenigstens eine zusätzliche Parameter nicht auf einen Typ von Parameter beschränkt ist, sondern Information zu verschiedenen Parametertypen bietet.

Der Geometrieparameter der Produktionsanlage ist im Allgemeinen beliebig. Besonders bevorzugt bezieht sich dieser Geometrieparameter der Produktionsanlage auf bauliche Größen wie beispielsweise den Schneckendurchmesser.

Bei einem Ausführungsbeispiel der Erfindung ist vorgesehen, dass die wenigstens eine abgeleitete Größe aus den Ist-Werten wenigstens einer Prozessgröße eines aktuellen Formgebungszyklus und/oder vergangener Formgebungszyklen und ggf. des wenigstens einen zusätzlichen Parameters berechnet wird und/oder in Bezug auf einen sich auf eine Drift beziehenden Wert.

Durch die Berechnung der wenigstens einen abgeleiteten Größe aus wenigstens einer Prozessgröße werden auch Ist-Werte und/oder Soll-Werte zu dieser abgeleiteten Größe ermöglicht.

Bei einem Ausführungsbeispiel der Erfindung ist vorgesehen, dass die wenigstens eine abgeleitete Größe aus nachstehender Liste ausgewählt ist:
- ein sich auf eine Drift einer Prozessgröße beziehender Wert
- eine statistische Kennzahl der Ist-Werte einer Prozessgröße eines aktuellen Formgebungszyklus und/oder vergangener Formgebungszyklen.

Bei einem Ausführungsbeispiel der Erfindung ist vorgesehen, dass der zumindest eine Algorithmus wenigstens eine Hypothese umfasst, wobei die wenigstens eine Hypothese in Bezug auf den tatsächlich vorliegenden wenigstens einen Prozesszustand und/oder einer Änderung des wenigstens einen Prozesszustandes eine mögliche Diagnose in Bezug auf eine Ursache für das Vorliegen des wenigstens einen Prozesszustandes und/oder der Änderung des wenigstens einen Prozesszustandes darstellt.

Dadurch wird es erst ermöglicht, dass der wenigstens eine Prozesszustand auf mögliche Ursachen überprüft wird und durch die Diagnose des Prozesszustandes erkennbar ist, wodurch der tatsächlich vorliegende Prozesszustand begründet ist.

Beispielsweise kann eine zu hohe Temperatur von Maschinenkomponenten durch eine zu hohe Umgebungstemperatur bedingt sein. Diese Information wird durch die wenigstens eine Hypothese bereitgestellt.

Bei einem Ausführungsbeispiel der Erfindung ist vorgesehen, dass die mögliche Diagnose die mögliche Diagnose durch die wenigstens eine Hypothese aufgrund des vorliegenden zumindest einen Algorithmus und
wenigstens eines Ereignisses erstellbar ist und/oder in Abhängigkeit wenigstens eines vorangegangenen Formgebungszyklus abänderbar ist.
Dadurch wird es ermöglicht, dass die Diagnose des wenigstens einen Prozesszustandes in Relation zu den tatsächlich vorliegenden Parametern gesehen wird und eine detailliertere Ursache des tatsächlich vorliegenden Prozesszustandes angegeben werden kann.

Die Hypothesen, welche eine Diagnose des tastsächlich vorliegenden Prozesszustandes gewährleisten, können durch wenigstens einen Parameter abgeglichen werden.

Die wenigstens eine Hypothese können im zeitlichen Verlauf mehrerer Formgebungszyklen verändert werden und/oder sukzessive an eine zutreffendere Hypothese angepasst werden.

Bei einem Ausführungsbeispiel der Erfindung ist vorgesehen, dass wenigstens eine elektronische Nachricht anzeigbar ist, die die wenigstens eine Diagnose in Form einer elektronischen Nachricht darstellt und/oder die das Zutreffen und/oder Nichtzutreffen der wenigstens einen Hypothese und/oder des wenigstens einen Prozesszustandes anzeigt.

Dadurch wird es ermöglicht, dass neben der Visualisierung des wenigstens einen Prozesszustandes auch die Hypothesen und deren Korrektheit dem Benutzer optisch aufbereitet sind. Der Benutzer wird zudem über den Prozesszustand informiert.

Bei einem Ausführungsbeispiel der Erfindung ist vorgesehen, dass für die Diagnose des tatsächlich vorliegenden wenigstens einen Prozesszustandes und/oder einer Änderung des wenigstens einen Prozesszustandes wenigstens zwei Hypothesen parallel heranziehbar und/oder anzeigbar sind.

Dadurch wird es ermöglicht, dass für den Benutzer der Vorrichtung wenigstens zwei Alternativen in der Diagnose des wenigstens einen tatsächlich vorliegenden Prozesszustandes aufbereitet sind.

Weiters ist es vorteilhaft, dass in der Kombination zweier Hypothesen eine genauere Ergründung der Ursachen des tatsächlich vorliegenden Prozesszustandes gewährleistet wird.

Bei einem Ausführungsbeispiel der Erfindung ist vorgesehen, dass die elektronische Nachricht von der Recheneinheit in Bezug auf zumindest einen der möglichen Prozesszustände mit zumindest einem feststehenden Nachrichtenelement und zumindest einem variablen Nachrichtenelement erstellt wird, wobei bevorzugt vorgesehen ist, dass das zumindest eine variable Nachrichtenelement wenigstens einen numerischen Wert wenigstens einer Prozessgröße und/oder wenigstens einer abgeleiteten Größe und/oder wenigstens eines zusätzlichen Parameters oder eine grafische Darstellung eines zeitlichen Verlaufs wenigstens eines numerischen Werts wenigstens einer Prozessgröße und/oder wenigstens einer abgeleiteten Größe und/oder wenigstens eines zusätzlichen Parameters enthält.

Dadurch wird eine flexiblere Aufbereitung der Daten ermöglicht und die Informationen werden für den Benutzer in einem höheren Maße strukturiert.

Bei einem Ausführungsbeispiel der Erfindung ist vorgesehen, dass die elektronische Nachricht wenigstens einen numerischen Wert wenigstens einer Prozessgröße und/oder wenigstens einer abgeleiteten Größe und/oder wenigstens eines zusätzlichen Parameters enthält.

Dadurch wird eine präzisere Informationsaufbereitung durch die elektronische Nachricht für den Benutzer ermöglicht.

Bei einem Ausführungsbeispiel der Erfindung ist vorgesehen, dass die elektronische Nachricht eine grafische Darstellung eines zeitlichen Verlaufs wenigstens eines numerischen Werts wenigstens einer Prozessgröße und/oder wenigstens einer abgeleiteten Größe und/oder wenigstens eines zusätzlichen Parameters enthält.

Dadurch wird eine benutzerfreundliche optische Aufbereitung wenigstens eines numerischen Werts ermöglicht, der dem Benutzer auf einen Blick den historischen Verlauf des wenigstens einen numerischen Werts ersichtlich macht.

Bei einem Ausführungsbeispiel der Erfindung ist vorgesehen, dass die elektronische Nachricht zumindest ein Nachrichtenelement in Form
- einer Klartextmeldung und/oder
- einer Grafik oder eines Bildes und/oder
- einer akustischen Meldung und/oder
- einer nicht-textualen, visuellen Meldung
beinhaltet.

Dadurch wird es ermöglicht, dass der Benutzer der Vorrichtung über mehrere Sinneswahrnehmungen auf die elektronische Nachricht hingewiesen wird und in einer optisch ansprechenden Form, welche die Daten visuell aufbereitet darstellt, angezeigt vorliegen hat.

Der Begriff Produktionsanlage ist zu unterscheiden vom Begriff Produktionsstandort, welcher in einem räumlich umrissenen Gebiet (z. B. einer Produktionshalle) eine Vielzahl von Produktionsanlagen aufweist. Die Erfindung bezieht sich auf eine Produktionsanlage, kann aber natürlich bei beliebig vielen Produktionsanlagen eingesetzt werden.

Bevorzugt handelt es sich bei der Formgebungsmaschine um eine Spritzgießmaschine, besonders bevorzugt um eine Kunststoff-Spritzgießmaschine.

Bevorzugt handelt es sich bei dem wenigstens einen Peripheriegerät um eine Handlingvorrichtung (z. B. Roboter).

Die Recheneinheit und/oder die Speichereinheit können bzw. kann in räumlicher Einheit mit der Produktionsanlage angeordnet sein, bevorzugt in baulicher Einheit mit der Formgebungsmaschine und/oder mit dem ggf. vorhandenen wenigstens einen Peripheriegerät (z. B. als Teil einer Maschinensteuerung der Produktionsanlage). Die Recheneinheit und/oder die Speichereinheit können bzw. kann aber zusätzlich oder alternativ räumlich fern der Produktionsanlage angeordnet sein (Cloud-Lösung) oder sich in einem gemeinsamen (beispielsweise lokalen) Netzwerk mit einer oder mehreren Produktionsanlagen befinden.

Die Ausgabevorrichtung kann einen Bildschirm aufweisen und/oder eine Signalerzeugungsvorrichtung zur Erzeugung und Abgabe akustischer oder visueller Signale. Die Ausgabevorrichtung kann als Bedienerschnittstelle der Produktionsanlage ausgebildet sein.

Ausführungsbeispiele der Erfindung werden anhand der Figuren diskutiert. Es zeigen:
- Fig. 1: eine Vorrichtung zur Überwachung einer in Formgebungszyklen arbeitenden Formgebungsmaschine und ggf. wenigstens ein Peripheriegerät enthaltenden Produktionsanlage in einer schematischen Ansicht,
- Fig. 2: einen Algorithmus gemäß einem ersten Ausführungsbeispiel,
- Fig. 3: einen Algorithmus gemäß einem zweiten Ausführungsbeispiel,
- Fig. 4: einen Algorithmus gemäß einem dritten Ausführungsbeispiel,
- Fig. 5: eine Bedienerschnittstelle der Produktionsanlage.

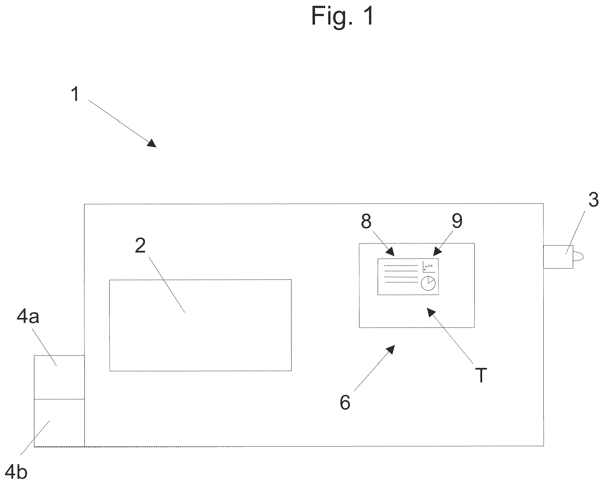

Fig. 1 zeigt eine Produktionsanlage 1 mit einer Recheneinheit 2 und einem Sensor 3. An einem Gehäuseteil der Produktionsanlage 1 sind zwei Speichereinheiten 4a, 4b angeordnet. Ein Computerprogrammprodukt (in der Darstellung aus Übersichtlichkeitsgründen nicht angezeigt) erstellt eine elektronische Nachricht T und sendet diese an eine Ausgabevorrichtung 6.

Die Ausgabevorrichtung 6 zeigt eine elektronische Nachricht T an, umfassend ein feststehendes Nachrichtenelement 8 und ein variables Nachrichtenelement 9. Die durch die Ausgabevorrichtung 6 angezeigte elektronische Nachricht T kann in einem weiteren Ausführungsbeispiel auch eine andere Anzahl an feststehenden Nachrichtenelementen 8 und variablen Nachrichtenelementen 9 aufweisen oder auf eine dieser Komponenten verzichten.

Die Form und Position des feststehenden Nachrichtenelementes 8 und des variablen Nachrichtenelementes 9 sind an sich beliebig. Besonders bevorzugt ist jedoch eine getrennte und klar strukturierte Anordnung, um dem Benutzer visuell ansprechend auf einen Blick die nötigen Informationen zum tatsächlich vorliegenden Prozesszustand Zₗ zu gewährleisten.

Es kann sich bei der Ausgabevorrichtung 6 beispielsweise um eine Bedienerschnittstelle (HMI) der Produktionsanlage 1 handeln, über welche die Informationen zum tatsächlich vorliegenden Prozesszustand Zₗ visualisiert werden.

Das variable Nachrichtenelement 9 kann beispielsweise Ist-Werte P_{1,ist}, P_{2,ist}, ..., P_{m,ist} der Prozessgrößen P₁, P₂, ..., Pₘ und/oder Ist-Werte G_{1,ist}, G_{2,ist}, ..., G_{n,ist} der abgeleiteten Größen G₁, G₂, ..., Gₙ beinhalten.

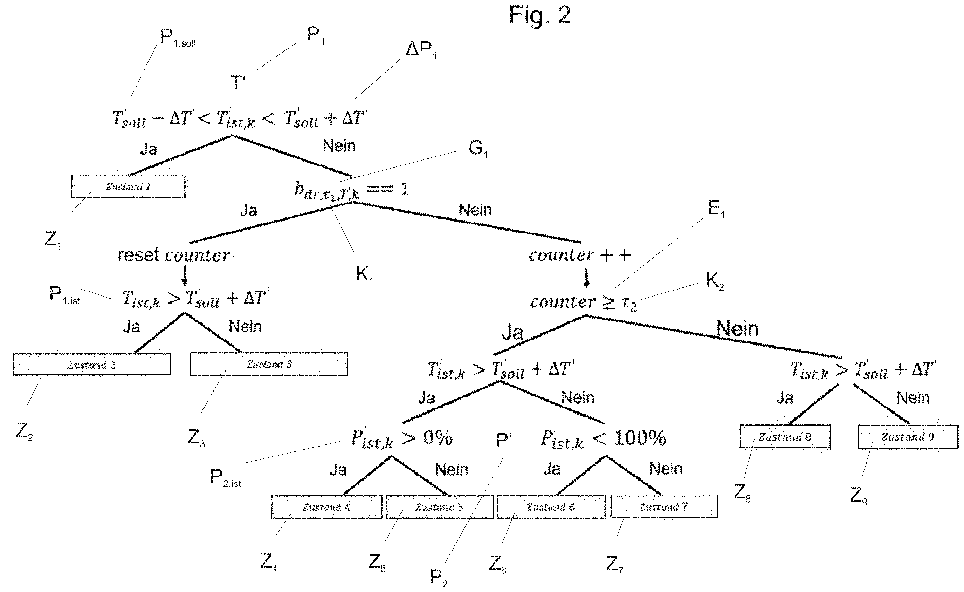

Fig. 2 zeigt einen Algorithmus Aₛ (hier beispielhaft als Entscheidungsbaum dargestellt, dies ist nicht einschränkend zu verstehen, gilt für alle Ausführungsbeispiele) in Bezug auf die Massezylindertemperatur einer Plastifiziereinheit einer als Kunststoff-Spritzgießmaschine ausgebildeten Formgebungsmaschine, wobei in der Plastifiziereinheit ein Kunststoffgranulat aufgeschmolzen wird.

Das Ausführungsbeispiel umfasst zwei Prozessgrößen P₁, P₂, welche die Temperatur T' und die Heizleistung P' einer Heizvorrichtung der Plastifiziereinheit darstellen. Weiters stellt T'_{soll,k} einen Soll-Wert P_{1,soll} der zugehörigen Prozessgröße P₁ dar. T'_{ist,k} und P'_{ist,k} stellen zwei Ist-Werte der zugehörigen Prozessgrößen P₁ respektive P₂ dar.

Ein Toleranzbereich der Prozessgröße ΔP₁ ist durch den Grenzwert für eine zulässige Temperaturabweichung ΔT' gegeben. Zwei zusätzliche Parameter K₁₁, K₁₂ umfassen einen relativen Index τ₁ des ersten Formgebungszyklus für ein Beobachtungsfenster und einen Grenzwert τ₂ für einen Zähler.

Der Prozessgrößensatz P (aus Übersichtlichkeitsgründen nicht dargestellt) wird durch die zwei Prozessgrößen P₁, P₂ gebildet.

Im vorliegenden Fall sind neun verschiedene Prozesszustände Z₁, Z₂, Z₃, Z₄, Z₅, Z₆, Z₇, Z₈, Z₉ möglich.

Im Allgemeinen muss nicht jeder Prozessgröße P₁, P₂, ..., Pₘ und/oder abgeleiteten Größe G₁, G₂, ..., Gₙ ein Prozesszustand Z₁, Z₂, ..., Z_{q} zugewiesen sein.

Der tatsächlich vorliegende Prozesszustand Zₗ wird durch Ausführung des Algorithmus Aₛ bestimmt und zusammen mit einer zugehörigen Hypothese Hᵣ (aus Übersichtlichkeitsgründen nicht dargestellt) in einer elektronischen Nachricht T (aus Übersichtlichkeitsgründen nicht dargestellt) aufbereitet.

Die nachstehenden Ausführungen zur elektronischen Nachricht T gelten für alle Ausführungsbeispiele.

Die elektronische Nachricht T kann aufgrund der Hypothesen Hᵣ zusätzlich Hinweise wie potentielle Erklärungen für einen Prozesszustand Z₁, Z₂, ..., Z_{q} und Handlungsanweisungen für den Bediener umfassen. Dies gewährleistet eine Beurteilung der Güte der Prozesseinstellung, des Prozesszustandes Z₁, Z₂, ..., Z_{q}, von Materialzuständen (zum Beispiel Änderung des zugeführten Materials), von Einflüssen ungemessener Störgrößen (zum Beispiel Umgebungsluft, Zugluft, etc.) sowie von Zuständen von Elementen der Produktionsanlage wie zum Beispiel eines Schließproblems der Rückstromsperre.

Zum tatsächlich vorliegenden Prozesszustand Zₗ können auch Graphiken wie zum Beispiel der zeitliche Verlauf (schussabhängig und/oder zeitabhängig) ausgewählter Prozessgrößen P₁, P₂, ..., Pₘ und/oder eines beliebigen Parameters visualisiert werden.

Weiters kann die elektronische Nachricht T in Verbindung mit Bildern (zum Beispiel von Anlagekomponenten, an denen ein Problem vorliegt) oder akustischen Meldungen in Form von Sprachtext, Warntönen und/oder Musik angezeigt werden. Auch optische Meldungen in Form von Warnlampen und/oder Lichtprojektionen sind möglich.

Die elektronische Nachricht T kann auch in Form einer teil- und/oder vollautomatischen Benachrichtigung an definierte Personen, Abteilungen und/oder Institutionen dargestellt werden. Eingriffe in die Produktion wie Ausschussselektion und/oder Produktionsunterbrechung können ebenfalls in Verbindung mit der elektronischen Nachricht T angezeigt werden.

Die elektronische Nachricht T kann zudem auf der Basis von künstlicher Intelligenz gebildet sein und/oder durch Expertensysteme aus Big Data lernen. Eine geführte Handlungsempfehlung für den Bediener ist ebenfalls erfindungsgemäß möglich, wobei zusätzlich ein Expertensystem aus der Zielführung der Fehlerbehebungsaktion lernt.

Eine abgeleitete Größe G₁ wird durch eine Bool'sche Variable b_{dr,τ1,T,k} angegeben, deren Wert angibt, ob im aktuellen Formgebungszyklus eine Drift der Prozessgröße P₁ der Temperatur T' vorliegt, wobei für die Beurteilung des Vorliegens einer Drift, ein Beobachtungsfenster der Größe τ1 der Formgebungszyklen für den gemessenen Temperatur-Ist-Wert T'_{ist,k} herangezogen wird.

Die Hilfsvariable k bezieht sich auf den Zykluszähler-Wert k für den aktuellen Formgebungszyklus.

Ein Counter zählt die Formgebungszyklen-Anzahl k durch die Hilfsvariable k und die Überschreitung des Grenzwertes τ₂ für den Zähler entspricht einem Ereignis E₁. Die Art der Ereignisse E₁, E₂, ..., Eₒ ist im Allgemeinen beliebig. Es kann sich bei einem Ereignis E₁, E₂, ..., Eₒ auch um einen Start der Anlage, einer Änderung von Soll-Werten P_{1,soll}, P_{2,soll}, ..., P_{m,soll} durch einen Benutzer, Über- oder Unterschreiten eines Soll-Werts P_{1,soll}, P_{2,soll}, ..., P_{m,soll} der Prozessgröße P₁, P₂, ..., Pₘ, etc. handeln.

Prozesszustände und zugehörige mögliche Meldungen:

| | |
|---|---|
| Prozesszustand Z₁ | Die aktuelle Temperatur liegt im Toleranzbereich. |
| | Mögliche Meldungen: |
| | Keine |
| | "Die Temperatur in Zone <5> ist seit <1.4.2019> stabil" |
| Prozesszustand Z2 | Die aktuelle Temperatur überschreitet den Sollwert um mehr als den Grenzwert für die zulässige Temperaturabweichung. |
| | Mögliche Meldungen: |
| | "Die eingestellte Temperatur ist noch nicht erreicht" |
| | "Heizungszone <5>: Temperatur nicht erreicht |

| | |
|---|---|
| Prozesszustand Z3 | Die aktuelle Temperatur unterschreitet den Sollwert um mehr als den Grenzwert für die zulässige Temperaturabweichung. |
| | Mögliche Meldung: |
| | "Die eingestellte Temperatur ist noch nicht erreicht" |
| | "Heizungszone <5>: Temperatur nicht erreicht |
| Prozesszustand Z4 | Die Temperatur liegt seit mindestens **τ**₂ Zyklen nahezu konstant um mindestens den Wert ΔT über dem Sollwert. Dennoch ist die Heizung noch aktiv (P_{ist,k} > 0) |
| | Mögliche Meldungen: |
| | "Heizungsregler-Einstellung prüfen" |
| | "Servicetechniker anrufen" |
| Prozesszustand Z₅ | Die Temperatur liegt seit mindestens **τ**₂ Zyklen nahezu konstant um mindestens den Wert ΔT über dem Sollwert. |
| | Mögliche Meldungen: |
| | "Die eingestellte Temperatur von <240 °C> wird um <5°C> überschritten. Mögliche Ursache: Beim Plastifizieren wird eine hohe Scherenergie eingebracht oder Beeinflussung durch benachbarte Heizungszone" |
| Prozesszustand Z6 | Die Temperatur liegt seit mindestens **τ**₂ Zyklen nahezu konstant um mindestens den Wert ΔT unter dem Sollwert. Die Heizung heizt nicht mit voller Leistung. |
| | Mögliche Meldungen: |
| | "Die eingestellte Temperatur von <240 °C> wird um <5°C> unterschritten. Die Anlage verwendet nicht die maximal mögliche Heizleistung um den Temperatur-Sollwert zu erreichen. Bitte Reglerparameter prüfen oder Kundendienst verständigen" |
| Prozesszustand Z₇ | Die Temperatur liegt seit mindestens **τ**₂ Zyklen nahezu konstant um mindestens den Wert ΔT unter dem Sollwert. Die Heizung heizt mit voller Leistung. |
| | Mögliche Meldungen: |
| | "Die eingestellte Soll-Temperatur kann nicht erreicht werden, die Heizleistung ist zu gering" |
| Prozesszustand Z₈ | Die Temperatur liegt seit weniger als **τ**₂ Zyklen nahezu konstant um mindestens den Wert ΔT über dem Sollwert. |
| | Mögliche Meldungen: |
| | Keine |
| | "Temperatur in Zone <5> zu hoch" |

| | |
|---|---|
| Prozesszustand Z₉ | Die Temperatur liegt seit weniger als **τ**₂ Zyklen nahezu konstant um mindestens den Wert ΔT unter dem Sollwert. |
| | Mögliche Meldungen: |
| | Keine |
| | "Temperatur in Zone <5> zu gering" |

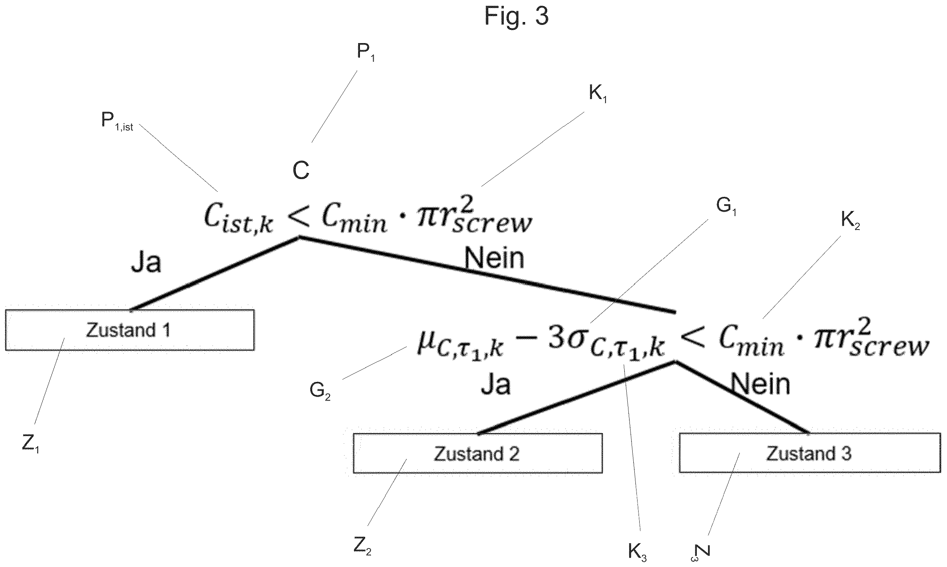

Fig. 3 zeigt einen Algorithmus Aₛ in Bezug auf die Massepolsterüberwachung einer Plastifiziereinheit einer als Kunststoff-Spritzgießmaschine ausgebildeten Formgebungsmaschine, wobei in der Plastifiziereinheit ein Kunststoffgranulat aufgeschmolzen wird. Die Prozessgröße P₁ stellt den Restmassepolster C des aufgeschmolzenen Kunststoffgranulats dar. C_{ist,k} stellt den Ist-Wert P_{1,ist} der zugehörigen Prozessgröße P₁ dar. Zwei abgeleitete Größen G₁, G₂ stellen die Streuung des Restmassepolsters σ_{c,τ1,k} und den Mittelwert des Restmassepolsters µ_{c,τ1,k} dar, welche vorzugsweise aus den vorangegangenen Formgebungszyklen ermittelt werden.

Drei zusätzliche Parameter K₁₁, K₁₂, K₁₃ stellen ein Radius der Schnecke r_{screw}, einen minimal zulässigen Restmassepolster Cₘᵢₙ und einen relativen Index τ₁ des ersten Formgebungszyklus für das Beobachtungsfenster dar.

Der Prozessgrößensatz P (aus Übersichtlichkeitsgründen nicht dargestellt) wird durch die zwei Prozessgrößen P₁ und die zwei abgeleiteten Größen G₁, G₂ gebildet.

Mit den abgeleiteten Größen G₁, G₂, ..., Gₘ können im Allgemeinen auch Soll-Werte G_{1,soll}, G_{2,soll}, ..., G_{n,soll} (in den Fig. nicht dargestellt) und/oder Ist-Werte G_{1,ist}, G_{2,ist}, ..., G_{n,ist} (in den Fig. nicht dargestellt) von abgeleiteten Größen G₁, G₂, ..., Gₙ verbunden sein.

Die Berechnung mit den Prozessparametern durch die Ausführung des Algorithmus Aₛ unterscheidet zwischen hier drei möglichen Prozesszustände Z₁, Z₂, Z₃.

Prozesszustände und zugehörige mögliche Meldungen:

| | |
|---|---|
| Prozesszustand Z₁ | Der aktuelle Restmassepolster unterschreitet einen kritischen Wert. |
| | Mögliche Meldungen: |
| | "Restmassepolster zu gering" |
| Prozesszustand Z2 | Der aktuelle Restmassepolster ist nahe am kritischen Wert und wird diesen möglicherweise in einem der nachfolgenden Zyklen unterschreiten. |
| | Mögliche Meldungen: |
| | "Restmassepolster zu gering" |
| Prozesszustand Z3 | Der Restmassepolster ist in einem akzeptablen Bereich. |
| | Mögliche Meldungen: |
| | Keine |

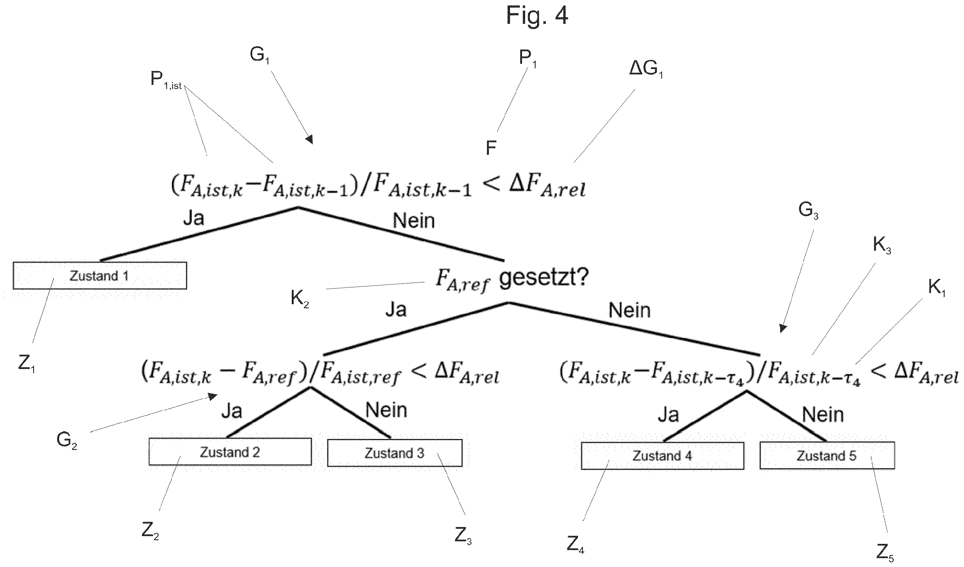

Fig. 4 zeigt einen Algorithmus Aₛ in Bezug auf die Auswerferkraft einer Auswerfvorrichtung einer Formgebungsmaschine. Die Prozessgröße P₁ stellt die Auswerferkraft F dar. Drei abgeleitete Größen G₁, G₂, G₃ stellen eine relative Änderung der Auswerferkraft gegenüber einem Wert des letzten Formgebungszyklus (F_{A,ist,k}-F_{A,k-1})/F_{A,ist,k-1}, eine relative Änderung der Auswerferkraft gegenüber einem fixen Referenzwert (F_{A,ist,k}-F_{A,ref})/F_{A,ist,ref} und eine relative Änderung der Auswerferkraft gegenüber dem gleitenden Referenzwert (F_{A,ist,k}-F_{A,ist,k- τ4})/F_{A,ist, k- τ4} dar.

Der Ist-Wert P_{1,ist} der zugehörigen Prozessgrößen P₁ ist durch die gemessene maximale Auswerferkraft F_{A,ist} im jeweiligen Formgebungszyklus k gegeben, wobei die Zyklusanzahl keine Hilfsvariable darstellt.

Den Toleranzbereich der abgeleiteten Größe ΔG₁ stellt die zulässige relative Änderung der Auswerferkraft ΔF_{A,rel} dar. Drei zusätzliche Parameter K₁, K₂, K₃ stellen ein relativer Index τ₄ des Vergleichszyklus, einen fixen Referenzwert für eine maximale Auswerferkraft F_{A,ref} und einen gleitenden Referenzwert für die maximale Auswerferkraft F_{A,ist,k- τ4} dar.

Der Prozessgrößensatz P (aus Übersichtlichkeitsgründen nicht dargestellt) wird durch die Prozessgröße P₁ und die drei abgeleiteten Größen G₁, G₂, G₃ gebildet.

Die Berechnung mit den Prozessparametern durch die Ausführung des Algorithmus Aₛ unterscheidet zwischen hier fünf möglichen Prozesszuständen Z₁, Z₂, Z₃, Z₄, Z₅. Für jeden dieser fünf möglichen Prozesszustände dieses Prozessgrößensatzes P ist eine nicht dargestellte Hypothese H₁, H₂, H₃, H₄, H₅ zur Diagnose vorhanden.

Prozesszustände und zugehörige mögliche Meldungen:

| | |
|---|---|
| Prozesszustand Z₁ | Erheblicher Anstieg der Auswerferkraft gegenüber dem vorangegangenen Zyklus Mögliche Meldungen: |
| | Der Maximalwert der Auswerferkraft ist im Vergleich zum letzten Schuss um <30>% angestiegen. |
| Prozesszustand Z2 | Erheblicher Anstieg der Auswerferkraft gegenüber dem Referenz-Zyklus |
| | Mögliche Meldungen: |
| | Der Maximalwert der Auswerferkraft ist im Vergleich zum Referenzschuss <10534> um <30> % angestiegen. |
| Prozesszustand Z3 | Auswerferkraft im zulässigen Bereich |
| | Mögliche Meldungen: |
| | Keine |
| Prozesszustand Z4 | Erheblicher Anstieg der Auswerferkraft innerhalb der letzten <2500> Zyklen |
| | Mögliche Meldungen: |
| | Der Maximalwert der Auswerferkraft ist innerhalb der letzten <2500> Zyklen um <30> % angestiegen. |
| Prozesszustand Z₅ | Auswerferkraft im zulässigen Bereich |
| | Mögliche Meldungen: |
| | Keine |

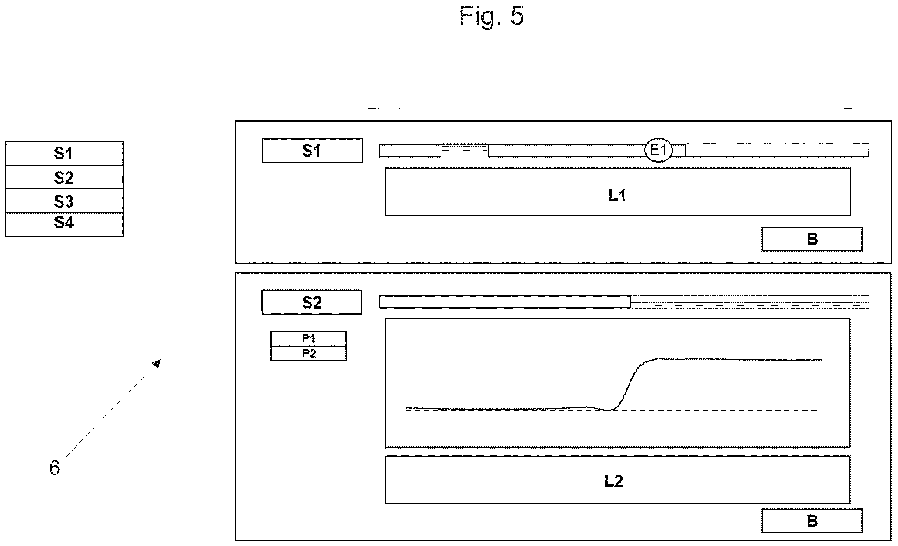

Fig. 5 zeigt schematisch ein Ausführungsbeispiel für eine Bedienerschnittstelle einer Ausgabevorrichtung 6 zur Ausgabe von elektronischen Nachrichten T.

Die Bereiche S₁ bis S₄ enthalten zum aktuellen Formgebungszyklus elektronische Nachrichten T (aus Übersichtlichkeitsgründen nicht dargestellt) in Kurzform zu in Bezug auf vier verschiedenen Algorithmen A_{1,} A₂, A₃, A₄ jeweils tatsächlich vorliegenden Prozesszuständen Z₁, Z₂, ..., Z_{q}. Jedem der vier verschiedenen Algorithmen A₁, A₂, A₃, A₄, sind unterschiedliche Prozesszustände Z₁, Z₂, ..., Z_{q} zugeordnet (sodass man eigentlich von einem Prozesszustand Zₛₗ in Bezug auf einen Algorithmus Aₛ sprechen müsste, wobei in der vorliegenden Offenbarung aber der Einfachheit halber nur von Zₗ gesprochen wird).

Je nach Algorithmus Aₛ können verschieden viele Prozesszustände Z_{q} vorliegen, sodass "q" für unterschiedliche Algorithmen A₁, A₂, ..., Aₜ unterschiedliche Werte aufweisen kann.

Rechts unten ist eine Schaltfläche B gezeigt, welche dem Benutzer ein Öffnen von Fenstern zur Eingabe und/oder zur weiteren Informationsgenerierung ermöglicht.

Die Bereiche S₁ bis S₄ dienen gleichzeitig als Schaltflächen zum Öffnen von Detailinformationen über den jeweiligen Prozesszustand Zₗ. In der Abbildung sind beispielhaft die Detailinformationen zu den Prozesszuständen Z₁ und Z₂ sichtbar. Die Detailinformationen enthalten neben den elektronischen Nachrichten T in Kurzform S₁, S₂ eine detailliertere Beschreibung L₁, L₂ sowie einen Statusbalken, der den zeitlichen Verlauf des Nichteintretens oder Eintretens des zugeordneten Zustandes in Form von unterschiedlichen Farben darstellt.

Der Statusbalken weist einen Startpunkt, gegeben durch einen Startzeitpunkt oder eine erste Zyklusnummer, auf und stellt den zeitlichen Verlauf des zugeordneten Zustandes bis zu einen Endpunkt, gegeben durch einen aktuellen Zeitpunkt oder eine aktuelle Zyklusnummer, dar. Im Statusbalken wird auch beispielhaft das Auftreten eines Ereignisses E₁ markiert.

Ein Ereignis E₁, E₂, ..., Eₒ kann z. B. eine Sollwertänderung durch den Benutzer, das Einlesen eines neuen Sollwert-Datensatzes durch den Benutzer, eine Betriebsunterbrechung oder ähnliches sein.

Die unterhalb der elektronische Nachricht T in Kurzform S₂ dargestellten Bereiche P1, P2 enthalten zusätzlich Auswahlfelder für die beiden Prozessgrößen P₁ und P₂, mit denen der Benutzer auswählen kann, für welche der beiden Prozessgrößen P₁ und P₂ ein Diagramm dargestellt werden soll.

Im Diagramm wird der zeitliche Verlauf einer der Ist-Werte (P_{1,ist}, P_{2,ist}) und des zugeordneten Sollwertes (P_{1,soll}, P_{2,soll}) dargestellt. Jeder Datenpunkt der Kurve ist einem Formgebungszyklus der Formgebungsmaschine zugeordnet.

In diesem Beispiel werden elektronische Nachrichten T zu jenen vier Prozesszuständen Z₁, Z₂, Z₃, Z₄ angezeigt, die im Beobachtungszeitraum (innerhalb des Startzeitpunktes und des aktuellen Zeitpunktes) oder im Beobachtungszyklusbereich (innerhalb der ersten Zyklusnummer und der aktuellen Zyklusnummer) mindestens einmal aufgetreten sind.

Der Beobachtungsbereich und/oder der Beobachtungszeitraum sind vom Benutzer wählbar. So ist es auch möglich, historische Daten hinsichtlich der aufgetretenen Prozesszustände Z₁, Z₂, Z₃, Z₄ zu analysieren. Ebenfalls vom Benutzer einstellbar ist die Möglichkeit der automatischen Aktualisierung der Anzeige nach Abschluss eines neuen Formgebungszyklus.

### Bezugszeichenliste:

- 1: Produktionsanlage
- 2: Recheneinheit
- 3: Sensor
- 4a, 4b: Speichereinheiten
- 5: Computerprogramm
- 6: Ausgabevorrichtung
- 8: feststehendes Nachrichtenelement
- 9: variables Nachrichtenelement
- P: Prozessgrößensatz
- P₁, P₂, ..., Pₘ: Prozessgrößen
- G₁, G₂, ..., Gₙ: abgeleitete Größen
- E₁, E₂, ..., Eₒ: Ereignis
- H₁, H₂, ..., Hᵣ: Hypothese
- T: elektronische Nachricht
- K₁, K₂, ..., Kᵥ: zusätzlicher Parameter
- P_{1,ist}, P_{2,ist}, ..., P_{m,ist}: Ist-Werte von Prozessgrößen
- P_{1,soll}, P_{2,soll}, ..., P_{m,soll}: Soll-Werte von Prozessgrößen
- G_{1,ist}, G_{2,ist}, ..., G_{n,ist}: Ist-Werte von abgeleiteten Größen
- G_{1,soll}, G_{2,soll}, ..., G_{n,soll}: Soll-Werte von abgeleiteten Größen
- ΔP₁, ΔP₂, ..., ΔPₘ: Toleranzbereiche von Prozessgrößen
- ΔG₁, ΔG₂, ..., ΔGₙ: Toleranzbereiche von abgeleiteten Größen
- P_{1,ref}, P_{2,ref}, ..., P_{m,ref}: Referenz-Werte von Prozessgrößen
- G_{1,ref}, G_{2,ref}, ..., G_{n,ref}: Referenz -Werte von abgeleiteten Größen
- Z₁, Z₂, ..., Z_{q}: Prozesszustände
- A_{1,} A₂, ..., Aₜ: Algorithmen

## Patentansprüche

1. Vorrichtung zur Überwachung einer in Formgebungszyklen arbeitenden Formgebungsmaschine und ggf. wenigstens ein Peripheriegerät enthaltenden Produktionsanlage (1) mit:
- einer Recheneinheit (2)
- wenigstens einem Sensor (3), mittels welchem zeitkontinuierlich oder zeitdiskret zumindest ein Ist-Wert (P_{1,ist}, P_{2,ist}, ..., P_{m,ist}) zumindest einer Prozessgröße (P₁, P₂, ..., Pₘ) der Produktionsanlage (1) ermittelbar ist, wobei der wenigstens eine Sensor (3) mit der Recheneinheit (2) in einer Datenverbindung steht oder in eine solche bringbar ist
- einer Speichereinheit (4a), welche mit der Recheneinheit (2) in einer Datenverbindung steht oder in eine solche bringbar ist, wobei in der Speichereinheit (4a) ein Computerprogramm (5) enthaltend Befehle abgelegt ist
- einer Ausgabevorrichtung (6), mit der die Recheneinheit (2) in einer Datenverbindung steht oder in eine solche bringbar ist
**dadurch gekennzeichnet, dass**
- in einer Speichereinheit (4b), welche mit der Recheneinheit (2) in einer Datenverbindung steht oder in eine solche bringbar ist
▪ in Bezug auf wenigstens einen Prozessgrößensatz (P), umfassend wenigstens zwei verschiedene Prozessgrößen (P₁, P₂, ..., Pₘ) der Produktionsanlage (1) oder wenigstens eine Prozessgröße (P₁, P₂, ..., Pₘ) mit wenigstens einer abgeleiteten Größe (G₁, G₂, ..., Gₙ), jeweils wenigstens drei mögliche Prozesszustände (Z₁, Z₂, ..., Z_{q}) der Produktionsanlage (1) abgelegt sind und in Bezug auf jeden Prozessgrößensatz (P) zumindest ein Algorithmus (A_{1,} A₂, ..., Aₜ) abgelegt ist, durch welchen unter Verwendung von Ist-Werten (P_{1,ist}, P_{2,ist}, ..., P_{m,ist}) wenigstens zweier Prozessgrößen (P₁, P₂, ..., Pₘ) oder eines Ist-Werts (P_{1,ist}, P_{2,ist}, ..., P_{m,ist}) wenigstens einer Prozessgröße (P₁, P₂, ..., Pₘ) und eines Ist-Werts (G_{1,ist}, G_{2,ist}, ..., G_{n,ist}) wenigstens einer abgeleiteten Größe (G₁, G₂, ..., Gₙ) und wenigstens eines zusätzlichen Parameters (K₁, K₂, ..., Kᵥ), welcher vom Ist-Wert (P_{1,ist}, P_{2,ist}, ..., P_{m,ist}) der jeweiligen Prozessgröße (P₁, P₂, ..., Pₘ) und vom Ist-Wert (G_{1,ist}, G_{2,ist}, ..., G_{n,ist}) der jeweiligen abgeleiteten Größe (G₁, G₂, ..., Gₙ) verschieden ist, berechenbar ist, welcher der in Bezug auf den jeweiligen Prozessgrößensatz (P) verschiedenen möglichen Prozesszustände (Z₁, Z₂, ..., Z_{q}) tatsächlich vorliegt
▪ die in Bezug auf den jeweiligen Prozessgrößensatz (P) verschiedenen möglichen Prozesszustände (Z₁, Z₂, ..., Z_{q}) dahingehend klassifiziert sind, ob Maßnahmen, welche eine Veränderung zumindest einer Prozessgröße (P₁, P₂, ..., Pₘ) und/oder zumindest einer abgeleiteten Größe (G₁, G₂, ..., Gₙ) bewirken, notwendig oder empfohlen sind, wobei in Bezug auf jeden Prozessgrößensatz (P) zumindest ein Prozesszustand (Z₁, Z₂, ..., Z_{q}) so klassifiziert ist, dass keine Maßnahmen notwendig oder empfohlen sind und zumindest ein Prozesszustand (Z₁, Z₂, ..., Z_{q}) so klassifiziert ist, dass Maßnahmen notwendig oder empfohlen sind
- die Befehle bei der Ausführung des Computerprogramms (5) durch die Recheneinheit (2) diese dazu veranlassen
▪ in Bezug auf den jeweiligen Prozessgrößensatzes (P) den zugehörigen zumindest einen Algorithmus (A₁, A₂, ..., Aₜ) auszuführen und so unter Verwendung von Ist-Werten (P_{1,ist}, P_{2,ist}, ..., P_{m,ist}) der wenigstens zwei Prozessgrößen (P₁, P₂, ..., Pₘ) oder des Ist-Werts (P_{1,ist}, P_{2,ist}, ..., P_{m,ist}) der wenigstens einen Prozessgröße (P₁, P₂, ..., Pₘ) und des Ist-Werts (G_{1,ist}, G_{2,ist}, ..., G_{n,ist}) der wenigstens einen abgeleiteten Größe (G₁, G₂, ..., Gₙ) und des wenigstens einen zusätzlichen Parameters (K₁, K₂, ..., Kᵥ) zu berechnen, welcher der in Bezug auf den jeweiligen Prozessgrößensatz (P) verschiedenen möglichen Prozesszustände (Z₁, Z₂, ..., Z_{q}) der Produktionsanlage (1) tatsächlich vorliegt und
▪ zu überprüfen, ob der tatsächlich vorliegende Prozesszustand (Z₁, Z₂, ..., Z_{q}) als ein solcher Prozesszustand (Z₁, Z₂, ..., Z_{q}) klassifiziert ist, für welchen eine Maßnahme, welche eine Veränderung des jeweiligen Prozessgrößensatzes (P) bewirkt, notwendig oder empfohlen ist
▪ für den Fall, dass in Bezug auf den tatsächlich vorliegenden Prozesszustand (Z₁, Z₂, ..., Z_{q}) aufgrund seiner Klassifikation eine Maßnahme notwendig oder empfohlen ist, in Abhängigkeit des berechneten Prozesszustandes (Z₁, Z₂, ..., Z_{q}) eine elektronische Nachricht (T) zu erstellen und mittels der Ausgabevorrichtung (6) auszugeben,
wobei die wenigstens eine abgeleitete Größe (G₁, G₂, ..., Gₙ) aus den Ist-Werten (P_{1,ist}, P_{2,ist}, ..., P_{m,ist}) wenigstens einer Prozessgröße (P₁, P₂, ..., Pₘ) eines aktuellen Formgebungszyklus und/oder vergangener Formgebungszyklen und ggf. des wenigstens einen zusätzlichen Parameters (K₁, K₂, ..., Kᵥ) berechnet wird und/oder sich der Ist-Wert (P_{1,ist}, P_{2,ist}, ..., P_{m,ist}) der wenigstens einen Prozessgröße (P₁, P₂, ..., Pₘ) auf einen aktuellen Formgebungsszyklus und/oder einen vergangenen Formgebungszyklus bezieht.

2. Vorrichtung nach Anspruch 1, wobei die elektronische Nachricht (T) eine Information beinhaltet:
- welche Maßnahme notwendig oder empfohlen ist und/oder
- welcher der in Bezug auf den Prozessgrößensatz (P) verschiedenen möglichen Prozesszustände (Z₁, Z₂, ..., Z_{q}) tatsächlich vorliegt

3. Vorrichtung nach einem der Ansprüche 1 oder 2, wobei wenigstens ein zusätzlicher Parameter (K₁, K₂, ..., Kᵥ) und/oder wenigstens eine Prozessgröße (P₁, P₂, ..., Pₘ) und/oder wenigstens eine abgeleitete Größe (G₁, G₂, ..., Gₙ) aus zumindest einem vorangegangenen Formgebungszyklus für die Ausführung des zumindest einen Algorithmus (A₁, A₂, ..., Aₜ) heranziehbar ist.

4. Vorrichtung nach einem der vorangehenden Ansprüche, wobei der wenigstens eine Prozesszustand (Z₁, Z₂, ..., Z_{q}) und/oder eine Änderung des wenigstens einen Prozesszustandes (Z₁, Z₂, ..., Z_{q}) in Form der elektronischen Nachricht (T) angezeigt wird.

5. Vorrichtung nach einem der vorangehenden Ansprüche, wobei zur Berechnung des tatsächlich vorliegenden Prozesszustandes (Z₁, Z₂, ..., Z_{q}) und/oder der Klassifikation des tatsächlich vorliegenden Prozesszustandes (Z₁, Z₂, ..., Z_{q}) wenigstens zwei Algorithmen parallel heranziehbar sind.

6. Vorrichtung nach einem der vorangehenden Ansprüche, wobei für den Fall, dass in Bezug auf den tatsächlich vorliegenden Prozesszustand (Z₁, Z₂, ..., Z_{q}) aufgrund seiner Klassifikation keine Maßnahme notwendig oder empfohlen ist, die Befehle bei der Ausführung des Computerprogramms (5) durch die Recheneinheit (2) diese dazu veranlassen, entweder keine Nachricht auszugeben oder eine elektronische Nachricht (T) zu erstellen und mittels der Ausgabevorrichtung (6) auszugeben, wobei die elektronische Nachricht (T) eine Information beinhaltet, welcher der in Bezug auf den jeweiligen Prozessgrößensatz (P) verschiedenen möglichen Prozesszustände (Z₁, Z₂, ..., Z_{q}) tatsächlich vorliegt und/oder eine Information, dass keine Maßnahme notwendig oder empfohlen ist.

7. Vorrichtung nach einem der vorangehenden Ansprüche, wobei sich wenigstens ein zusätzlicher Parameter (K₁, K₂, ..., Kᵥ) auf einen Ist-Wert (P_{1,ist}, P_{2,ist}, ..., P_{m,ist}) der zugehörigen Prozessgröße (P₁, P₂, ..., Pₘ) und/oder auf einen Ist-Wert (G_{1,ist}, G_{2,ist}, ..., G_{n,ist}) der zugehörigen abgeleiteten Größe (G₁, G₂, ..., Gₙ) aus zumindest einem vorangegangenen Formgebungszyklus der Formgebungsmaschine bezieht, wobei vorzugsweise vorgesehen ist, dass aus einer Vielzahl von Ist-Werten (P_{1,ist}, P_{2,ist}, ..., P_{m,ist}) der zugehörigen Prozessgröße (P₁, P₂, ..., Pₘ) und/oder aus einer Vielzahl von Ist-Werten (G_{1,ist}, G_{2,ist}, ..., G_{n,ist}) der zugehörigen abgeleiteten Größe (G₁, G₂, ..., Gₙ) aus einer Vielzahl von vorangegangenen Formgebungszyklen ein historischer Verlauf des Ist-Werts (P_{1,ist}, P_{2,ist}, ..., P_{m,ist}) der zugehörigen Prozessgröße (P₁, P₂, ..., Pₘ) und/oder des Ist-Werts (G_{1,ist}, G_{2,ist}, ..., G_{n,ist}) der zugehörigen abgeleiteten Größe (G₁, G₂, ..., Gₙ) berechnet wird.

8. Vorrichtung nach wenigstens einem der vorangehenden Ansprüche, wobei wenigstens ein zusätzlicher Parameter (K₁, K₂..., Kᵥ) aus nachstehender Liste ausgewählt ist:
- ein Soll-Wert (P_{1,soll}, P_{2,soll}, ..., P_{m,soll}) zumindest einer Prozessgröße (P₁, P₂, ..., Pₘ), ggf. jener Prozessgröße (P₁, P₂, ..., Pₘ), in Bezug auf welche der tatsächlich vorliegende Prozesszustand (Z₁, Z₂, ..., Z_{q}) zu berechnen ist
- ein Soll-Wert (G_{1,soll}, G_{2,soll}, ..., G_{n,soll}) zumindest einer abgeleiteten Größe (G₁, G₂, ..., Gₙ), ggf. jener abgeleiteten Größe (G₁, G₂, ..., Gₙ), in Bezug auf welche der tatsächlich vorliegende Prozesszustand (Z₁, Z₂, ..., Z_{q}) zu berechnen ist
- ein Ist-Wert (P_{1,ist}, P_{2,ist}, ..., P_{m,ist}) zumindest einer Prozessgröße (P₁, P₂, ..., Pₘ) aus zumindest einem vorangegangenen Zyklus
- ein Ist-Wert (G_{1,ist}, G_{2,ist}, ..., G_{n,ist}) einer abgeleiteten Größe (G₁, G₂, ..., Gₙ) aus zumindest einem vorangegangenen Zyklus
- ein Referenz-Wert (P_{1,ref}, P_{2,ref}, ..., P_{m,ref}) zumindest einer Prozessgröße (P₁, P₂, ..., Pₘ), ggf. jener Prozessgröße (P₁, P₂, ..., Pₘ), in Bezug auf welche der tatsächlich vorliegende Prozesszustand (Z₁, Z₂, ..., Z_{q}) zu berechnen ist
- ein Referenz -Wert (G_{1,ref}, G_{2,ref}, ..., G_{n,ref}) zumindest einer abgeleiteten Größe (G₁, G₂, ..., Gₙ), ggf. jener abgeleiteten Größe (G₁, G₂, ..., Gₙ), in Bezug auf welche der tatsächlich vorliegende Prozesszustand (Z₁, Z₂, ..., Z_{q}) zu berechnen ist
- ein Toleranzbereich (ΔP₁, ΔP₂, ..., ΔPₘ) zumindest einer Prozessgröße (P₁, P₂, ..., Pₘ), ggf. jener Prozessgröße (P₁, P₂, ..., Pₘ), in Bezug auf welche der tatsächlich vorliegende Prozesszustand (Z₁, Z₂, ..., Z_{q}) zu berechnen ist
- ein Toleranzbereich (ΔG_{1,} ΔG₂, ..., ΔGₙ) zumindest einer abgeleiteten Größe (G₁, G₂, ..., Gₙ), ggf. jener abgeleiteten Größe (G₁, G₂, ..., Gₙ), in Bezug auf welche der tatsächlich vorliegende Prozesszustand (Z₁, Z₂, ..., Z_{q}) zu berechnen ist
- eine Hilfsvariable, vorzugsweise eine Zählvariable
- ein Geometrieparameter der Formgebungsmaschine und/oder ggf. des wenigstens einen Peripheriegeräts
- komponentenspezifische Parameter der Formgebungsmaschine und/oder ggf. des wenigstens einen Peripheriegeräts
- Leistungsdaten der Formgebungsmaschine und/oder ggf. des wenigstens einen Peripheriegeräts
- Parameter eines Rohmaterials

9. Vorrichtung nach wenigstens einem der vorangehenden Ansprüche, wobei die wenigstens eine abgeleitete Größe (G₁, G₂, ..., Gₙ) in Bezug auf einen sich auf eine Drift beziehenden Wert berechnet wird.

10. Vorrichtung nach Anspruch 9, wobei die wenigstens eine abgeleitete Größe (G₁, G₂, ..., Gₙ) aus nachstehender Liste ausgewählt ist:
- ein sich auf eine Drift einer Prozessgröße (P1, P2, ..., Pm) beziehender Wert
- eine statistische Kennzahl der Ist-Werte einer Prozessgröße (P1, P2, ..., Pm) eines aktuellen Formgebungszyklus und/oder vergangener Formgebungszyklen.

11. Vorrichtung nach einem der vorangehenden Ansprüche, wobei der zumindest eine Algorithmus (A₁, A₂, ..., Aₜ) wenigstens eine Hypothese (H₁, H₂, ..., Hᵣ) umfasst, wobei die wenigstens eine Hypothese (H₁, H₂, ..., Hᵣ) in Bezug auf den tatsächlich vorliegenden wenigstens einen Prozesszustand (Z₁, Z₂, ..., Z_{q}) und/oder der Änderung des wenigstens einen Prozesszustandes (Z₁, Z₂, ..., Z_{q}) eine mögliche Diagnose in Bezug auf eine Ursache für das Vorliegen des wenigstens einen Prozesszustandes (Z₁, Z₂, ..., Z_{q}) und/oder der Änderung des wenigstens einen Prozesszustandes (Z₁, Z₂, ..., Z_{q}) darstellt.

12. Vorrichtung nach Anspruch 11, wobei die mögliche Diagnose durch die wenigstens eine Hypothese (H₁, H₂, ..., Hᵣ) aufgrund des vorliegenden zumindest einen Algorithmus (A₁, A₂, ..., Aₜ) und
- wenigstens eines Ereignisses (E₁, E₂, ..., Eₒ) erstellbar ist und/oder in Abhängigkeit wenigstens eines vorangegangenen Formgebungszyklus abänderbar ist.

13. Vorrichtung nach einem der Ansprüche 11 oder 12, wobei wenigstens eine elektronische Nachricht (T) anzeigbar ist, die die wenigstens eine Diagnose in Form einer elektronischen Nachricht (T) darstellt und/oder die das Zutreffen und/oder Nichtzutreffen der wenigstens einen Hypothese (H₁, H₂, ..., Hᵣ) und/oder des wenigstens einen Prozesszustandes (Z₁, Z₂, ..., Z_{q}) anzeigt.

14. Vorrichtung nach einem der Ansprüche 11 bis 13, wobei für die Diagnose des tatsächlich vorliegenden wenigstens einen Prozesszustandes (Z₁, Z₂, ..., Z_{q}) und/oder einer Änderung des wenigstens einen Prozesszustandes (Z₁, Z₂, ..., Z_{q}) wenigstens zwei Hypothesen (H₁, H₂, ..., Hᵣ) parallel heranziehbar und/oder anzeigbar sind.

15. Vorrichtung nach wenigstens einem der vorangehenden Ansprüche, wobei die elektronische Nachricht (T) von der Recheneinheit (2) in Bezug auf zumindest einen der möglichen Prozesszustände (Z₁, Z₂, ..., Z_{q}) mit zumindest einem feststehenden Nachrichtenelement (8) und zumindest einem variablen Nachrichtenelement (9) erstellt wird, wobei bevorzugt vorgesehen ist, dass das zumindest eine variable Nachrichtenelement (9) wenigstens einen numerischen Wert wenigstens einer Prozessgröße (P₁, P₂, ..., Pₘ) und/oder wenigstens einer abgeleiteten Größe (G₁, G₂, ..., Gₙ) und/oder wenigstens eines zusätzlichen Parameters (K₁, K₂, ..., Kᵥ) oder eine grafische Darstellung eines zeitlichen Verlaufs wenigstens eines numerischen Werts wenigstens einer Prozessgröße (P₁, P₂, ..., Pₘ) und/oder wenigstens einer abgeleiteten Größe (G₁, G₂, ..., Gₙ) und/oder wenigstens eines zusätzlichen Parameters (K₁, K₂, ..., Kᵥ) enthält.

16. Vorrichtung nach wenigstens einem der vorangehenden Ansprüche, wobei die elektronische Nachricht (T) wenigstens einen numerischen Wert wenigstens einer Prozessgröße (P₁, P₂, ..., Pₘ) und/oder wenigstens einer abgeleiteten Größe (G₁, G₂, ..., Gₙ) und/oder wenigstens eines zusätzlichen Parameters (K₁, K₂, ..., Kᵥ) enthält.

17. Vorrichtung nach wenigstens einem der vorangehenden Ansprüche, wobei die elektronische Nachricht (T) eine grafische Darstellung eines zeitlichen Verlaufs wenigstens eines numerischen Werts wenigstens einer Prozessgröße (P₁, P₂, ..., Pₘ) und/oder wenigstens einer abgeleiteten Größe (G₁, G₂, ..., Gₙ) und/oder wenigstens eines zusätzlichen Parameters (K₁, K₂, ..., Kᵥ) enthält.

18. Vorrichtung nach wenigstens einem der vorangehenden Ansprüche, wobei die elektronische Nachricht zumindest ein Nachrichtenelement in Form
- einer Klartextmeldung und/oder
- einer Grafik oder eines Bildes und/oder
- einer akustischen Meldung und/oder
- nicht-textualen, visuellen Meldung
beinhaltet.

19. Produktionsanlage (1) mit einer in Formgebungszyklen arbeitenden Formgebungsmaschine und ggf. wenigstens einem Peripheriegerät und einer Vorrichtung nach wenigstens einem der vorangehenden Ansprüche.

20. Computerprogrammprodukt, umfassend Befehle, die bei der Ausführung durch eine Recheneinheit (2) diese veranlassen, für eine in Formgebungszyklen arbeitenden Formgebungsmaschine und ggf. wenigstens ein Peripheriegerät enthaltenden Produktionsanlage (1)
- aus einer Speichereinheit (4b), welche mit der Recheneinheit (2) in einer Datenverbindung steht oder in eine solche bringbar ist, in Bezug auf wenigstens einen Prozessgrößensatz (P) der Produktionsanlage (1) jeweils wenigstens drei mögliche Prozesszustände (Z₁, Z₂, ..., Z_{q}) der Produktionsanlage (1) abzurufen und in Bezug auf jeden Prozessgrößensatz (P) zumindest einen Algorithmus (A₁, A₂, ..., Aₜ) abzurufen, durch welchen unter Verwendung von Ist-Werten (P_{1,ist}, P_{2,ist}, ..., P_{m,ist}) wenigstens zweier Prozessgrößen (P₁, P₂, ..., Pₘ) oder eines Ist-Werts (P_{1,ist}, P_{2,ist}, ..., P_{m,ist}) wenigstens einer Prozessgröße (P₁, P₂, ..., Pₘ) und eines Ist-Werts (G_{1,ist}, G_{2,ist}, ..., G_{n,ist}) der jeweiligen abgeleiteten Größe (G₁, G₂, ..., Gₙ) und wenigstens eines zusätzlichen Parameters (K₁, K₂, ..., Kᵥ), welcher vom Ist-Wert (P_{1,ist}, P_{2,ist}, ..., P_{m,ist}) der jeweiligen Prozessgröße (P₁, P₂, ..., Pₘ) und vom Ist-Wert (G_{1,ist}, G_{2,ist}, ..., G_{n,ist}) der jeweiligen abgeleiteten Größe (G₁, G₂, ..., Gₙ) verschieden ist, berechenbar ist, welcher der in Bezug auf den jeweiligen Prozessgrößensatz (P) verschiedenen möglichen Prozesszustände (Z₁, Z₂, ..., Z_{q}) der Produktionsanlage (1) tatsächlich vorliegt, wobei die in Bezug auf den jeweiligen Prozessgrößensatz (P) verschiedenen möglichen Prozesszustände (Z₁, Z₂, ..., Z_{q}) dahingehend klassifiziert sind, ob Maßnahmen, welche eine Veränderung der jeweiligen Prozessgröße (P₁, P₂, ..., Pₘ) und/oder abgeleiteten Größe (G₁, G₂, ..., Gₙ) bewirken, notwendig oder empfohlen sind, wobei in Bezug auf jeden Prozessgrößensatz (P) zumindest ein Prozesszustand (Z₁, Z₂, ..., Z_{q}) so klassifiziert ist, dass keine Maßnahmen notwendig oder empfohlen sind und zumindest ein Prozesszustand (Z₁, Z₂, ..., Z_{q}) so klassifiziert ist, dass Maßnahmen notwendig oder empfohlen sind
- die wenigstens eine abgeleitete Größe (G₁, G₂, ..., Gₙ) aus den Ist-Werten (P_{1,ist}, P_{2,ist}, ..., P_{m,ist}) wenigstens einer Prozessgröße (P₁, P₂, ..., Pₘ) eines aktuellen Formgebungszyklus und/oder vergangener Formgebungszyklen und ggf. des wenigstens einen zusätzlichen Parameters (K₁, K₂, ..., Kᵥ) zu berechnen und/oder den Ist-Wert (P_{1,ist}, P_{2,ist}, ..., P_{m,ist}) der wenigstens einen Prozessgröße (P₁, P₂, ..., Pₘ) auf einen aktuellen Formgebungszyklus und/oder einen vergangenen Formgebungszyklus zu beziehen
- in Bezug auf wenigstens einen Prozessgrößensatz (P) den zugehörigen zumindest einen Algorithmus (A₁, A₂, ..., Aₜ) auszuführen und so unter Berücksichtigung der Ist-Werte (P_{1,ist}, P_{2,ist}, ..., P_{m,ist}) der wenigstens zwei Prozessgrößen (P₁, P₂, ..., Pₘ) oder des Ist-Werts (P_{1,ist}, P_{2,ist}, ..., P_{m,ist}) der wenigstens einen Prozessgröße (P₁, P₂, ..., Pₘ) und des Ist-Werts (G_{1,ist}, 6_{2,ist}, ..., G_{n,ist}) der jeweiligen abgeleiteten Größe (G₁, G₂, ..., Gₙ) und wenigstens eines zusätzlichen Parameters (K₁, K₂, ..., Kᵥ) zu berechnen, welcher der in Bezug auf den jeweiligen Prozessgrößensatz (P) verschiedenen möglichen Prozesszustände (Z₁, Z₂, ..., Z_{q}) tatsächlich vorliegt und
- zu überprüfen, ob der tatsächlich vorliegende Prozesszustand (Z₁, Z₂, ..., Z_{q}) als ein solcher Prozesszustand (Z₁, Z₂, ..., Z_{q}) klassifiziert ist, für welchen eine Maßnahme, welche eine Veränderung der jeweiligen Prozessgröße (P₁, P₂, ..., Pₘ) und/oder abgeleiteten Größe (G₁, G₂, ..., Gₙ) bewirkt, notwendig oder empfohlen ist,
- für den Fall, dass in Bezug auf den tatsächlich vorliegenden Prozesszustand (Z₁, Z₂, ..., Z_{q}) aufgrund seiner Klassifikation eine Maßnahme notwendig oder empfohlen ist, in Abhängigkeit des berechneten Prozesszustandes (Z₁, Z₂, ..., Z_{q}) eine elektronische Nachricht (T) zu erstellen und mittels einer Ausgabevorrichtung (6) auszugeben, wobei bevorzugt vorgesehen ist, dass die elektronische Nachricht (T) eine Information beinhaltet, welcher der in Bezug auf den Prozessgrößensatz (P) verschiedenen möglichen Prozesszustände (Z₁, Z₂, ..., Z_{q}) tatsächlich vorliegt.

21. Verfahren zum Überwachen einer in Formgebungszyklen arbeitenden Formgebungsmaschine und ggf. wenigstens ein Peripheriegerät enthaltenden Produktionsanlage (1), wobei mittels einer Recheneinheit (2)
- in Bezug auf wenigstens einen Prozessgrößensatz (P) der Produktionsanlage (1) unter Berücksichtigung von Ist-Werten (P_{1,ist}, P_{2,ist}, ..., P_{m,ist}) wenigstens zweier Prozessgrößen (P₁, P₂, ..., Pₘ) oder eines Ist-Werts (P_{1,ist}, P_{2,ist}, ..., P_{m,ist}) wenigstens einer Prozessgröße (P₁, P₂, ..., Pₘ) und eines Ist-Werts (G_{1,ist}, G_{2,ist}, ..., G_{n,ist}) einer jeweiligen abgeleiteten Größe (G₁, G₂, ..., Gₙ) und wenigstens eines zusätzlichen Parameters (K₁, K₂, Kᵥ) berechnet wird, welcher der in Bezug auf den jeweiligen Prozessgrößensatz (P) verschiedenen möglichen Prozesszustände (Z₁, Z₂, ..., Z_{q}) der Produktionsanlage (1) tatsächlich vorliegt, wobei die wenigstens eine abgeleitete Größe (G₁, G₂, ..., Gₙ) aus den Ist-Werten (P_{1,ist}, P_{2,ist}, ..., P_{m,ist}) wenigstens einer Prozessgröße (P₁, P₂, ..., Pₘ) eines aktuellen Formgebungszyklus und/oder vergangener Formgebungszyklen und ggf. des wenigstens einen zusätzlichen Parameters (K₁, K₂, ..., Kᵥ) berechnet wird und/oder der Ist-Wert (P_{1,ist}, P_{2,ist}, ..., P_{m,ist}) der wenigstens einen Prozessgröße (P₁, P₂, ..., Pₘ) auf einen aktuellen Formgebungszyklus und/oder einen vergangenen Formgebungszyklus bezogen wird, und
- überprüft wird, ob der tatsächlich vorliegende Prozesszustand (Z₁, Z₂, ..., Z_{q}) als ein solcher Prozesszustand (Z₁, Z₂, ..., Z_{q}) klassifiziert ist, für welchen eine Maßnahme, welche eine Veränderung der jeweiligen Prozessgröße (P₁, P₂, ..., Pₘ) und/oder abgeleiteten Größe (G₁, G₂, ..., Gₙ) bewirkt, notwendig oder empfohlen ist,
- für den Fall, dass in Bezug auf den tatsächlich vorliegenden Prozesszustand (Z₁, Z₂, ..., Z_{q}) aufgrund seiner Klassifikation eine Maßnahme notwendig oder empfohlen ist, in Abhängigkeit des berechneten Prozesszustandes (Z₁, Z₂, ..., Z_{q}) eine elektronische Nachricht (T) zu erstellen und mittels einer Ausgabevorrichtung (6) auszugeben, wobei vorzugsweise vorgesehen ist, dass die elektronische Nachricht (T) eine Information beinhaltet, welcher der in Bezug auf den Prozessgrößensatz (P) verschiedenen möglichen Prozesszustände (Z₁, Z₂, ..., Z_{q}) tatsächlich vorliegt.

## Claims

1. A device for monitoring a moulding machine functioning in moulding cycles and production facility (1) optionally containing at least one peripheral device with:
- a computing unit (2),
- at least one sensor (3), by means of which at least one actual value (P_{1,actual}, P_{2,actual}, ... , P_{m,actual}) of at least one process variable (P₁, P₂, ..., Pₘ) of the production facility (1) can be determined in time-continuous or time-discrete manner, wherein the at least one sensor (3) is in or can be brought into data connection with the computing unit (2),
- a memory unit (4a), which is in or can be brought into data connection with the computing unit (2), wherein a computer program (5) containing commands is stored in the memory unit (4a),
- an output device (6), with which the computing unit (2) is in or can be brought into data connection,
**characterized in that**,
- in a memory unit (4b) which is in or can be brought into data connection with the computing unit (2),
▪ in relation to at least one process variable set (P), comprising at least two different process variables (P₁, P₂, ..., Pₘ) of the production facility (1) or at least one process variable (P₁, P₂, ... , Pₘ) with at least one derived variable (G₁, G₂, ..., Gₙ), in each case at least three possible process states (Z₁, Z₂, ... , Z_{q}) of the production facility (1) are stored and, in relation to each process variable set (P), at least one algorithm (A₁, A₂, ..., Aₜ) is stored by which, using actual values (P_{1,actual}, P_{2,actual}, ... , P_{m,actual}) of at least two process variables (P₁, P₂, ..., Pₘ) or one actual value (P_{1,actual}, P_{2,actual}, ..., P_{m,actual}) of at least one process variable (P₁, P₂, ... , Pₘ) and one actual value (G_{1,actual}, G_{2,actual}, ..., G_{n,actual}) of at least one derived variable (G₁, G₂, ... , Gₙ) and at least one additional parameter (K₁, K₂, ... , Kᵥ) which is different from the actual value (P_{1,actual}, P_{2,actual}, ..., P_{m,actual}) of the respective process variable (P₁, P₂, ..., Pₘ) and from the actual value (G_{1,actual}, G_{2,actual}, ..., G_{n,actual}) of the respective derived variable (G₁, G₂, ..., Gₙ), it can be calculated which of the possible process states (Z₁, Z₂, ..., Z_{q}) that differ in relation to the respective process variable set (P) is actually present,
▪ the possible process states (Z₁, Z₂, ..., Z_{q}) that differ in relation to the respective process variable set (P) are classified according to whether measures which bring about an alteration of at least one process variable (P₁, P₂, ..., Pₘ) and/or at least one derived variable (G₁, G₂, ..., Gₙ) are necessary or recommended, wherein, in relation to each process variable set (P), at least one process state (Z₁, Z₂, ..., Z_{q}) is classified such that no measures are necessary or recommended and at least one process state (Z₁, Z₂, ..., Z_{q}) is classified such that measures are necessary or recommended,
- the commands during the execution of the computer program (5) by the computing unit (2) prompt it
▪ to execute, in relation to the respective process variable set (P), the associated at least one algorithm (A₁, A₂, ..., Aₜ) and thus, using actual values (P_{1,actual}, P_{2,actual}, ..., P_{m,actual}) of the at least two process variables (P₁, P₂, ..., Pₘ) or the actual value (P_{1,actual}, P_{2,actual}, ..., P_{m,actual}) of the at least one process variable (P₁, P₂, ..., Pₘ) and the actual value (G_{1,actual}, G_{2,actual}, ..., G_{n,actual}) of the at least one derived variable (G₁, G₂, ..., Gₙ) and the at least one additional parameter (K₁, K₂, ..., Kᵥ), to calculate which of the possible process states (Z₁, Z₂, ..., Z_{q}) of the production facility (1) that differ in relation to the respective process variable set (P) is actually present and
▪ to check whether the actually present process state (Z₁, Z₂, ..., Z_{q}) is classified as such a process state (Z₁, Z₂, ..., Z_{q}) for which a measure which brings about an alteration of the respective process variable set (P) is necessary or recommended,
▪ for the case where a measure is necessary or recommended in relation to the actually present process state (Z₁, Z₂, ..., Z_{q}) because of its classification, to generate an electronic message (T) depending on the calculated process state (Z₁, Z₂, ..., Z_{q}) and to output it by means of the output device (6),
wherein the at least one derived variable (G₁, G₂, ..., Gₙ) is calculated from the actual values (P_{1,actual}, P_{2,actual}, ..., P_{m,actual}) of at least one process variable (P₁, P₂, ..., Pₘ) of a current moulding cycle and/or of past moulding cycles and optionally of the at least one additional parameter (K₁, K₂, ..., Kᵥ) and/or the actual value (P_{1,actual}, P_{2,actual}, ... , P_{m,actual}) of at least one process variable (P₁, P₂, ..., Pₘ) relates to an actual moulding cycle and/or to a past moulding cycle.

2. The device according to claim 1, wherein the electronic message (T) contains an item of information as to:
- which measure is necessary or recommended and/or
- which of the possible process states (Z₁, Z₂, ..., Z_{q}) that differ in relation to the process variable set (P) is actually present.

3. The device according to one of claims 1 or 2, wherein at least one additional parameter (K₁, K₂, ..., Kᵥ) and/or at least one process variable (P₁, P₂, ..., Pₘ) and/or at least one derived variable (G₁, G₂, ..., Gₙ) from at least one preceding moulding cycle can be used for the execution of the at least one algorithm (A₁, A₂, ... , At).

4. The device according to one of the preceding claims, wherein the at least one process state (Z₁, Z₂, ... , Z_{q}) and/or a change in the at least one process state (Z₁, Z₂, ... , Z_{q}) is displayed in the form of the electronic message (T).

5. The device according to one of the preceding claims, wherein at least two algorithms can be used in parallel for the calculation of the actually present process state (Z₁, Z₂, ... , Z_{q}) and/or the classification of the actually present process state (Z₁, Z₂, ... , Z_{q}).

6. The device according to one of the preceding claims, wherein, for the case where no measure is necessary or recommended in relation to the actually present process state (Z₁, Z₂, ..., Z_{q}) because of its classification, the commands during the execution of the computer program (5) by the computing unit (2) prompt it either not to output a message or to generate an electronic message (T) and output it by means of the output device (6), wherein the electronic message (T) contains an item of information as to which of the possible process states (Z₁, Z₂, ..., Z_{q}) that differ in relation to the respective process variable set (P) is actually present and/or an item of information that no measure is necessary or recommended.

7. The device according to one of the preceding claims, wherein at least one additional parameter (K₁, K₂, ..., Kᵥ) relates to an actual value (P_{1,actual}, P_{2,actual}, ..., P_{m,actual}) of the associated process variable (P₁, P₂, ..., Pₘ) and/or to an actual value (G_{1,actual}, G_{2,actual}, ... , G_{n,actual}) of the associated derived variable (G₁, G₂, ... , Gₙ) from at least one preceding moulding cycle of the moulding machine, wherein it is preferably provided that a historical progression of the actual value (P_{1,actual}, P_{2,actual}, ... , P_{m,actual}) of the associated process variable (P₁, P₂, ... , Pₘ) and/or the actual value (G_{1,actual}, G_{2,actual}, ... , G_{n,actual}) of the associated derived variable (G₁, G₂, ... , Gₙ) is calculated from a plurality of actual values (P_{1,actual}, P_{2,actual}, ... , P_{m,actual}) of the associated process variable (P₁, P₂, ... , Pₘ) and/or from a plurality of actual values (G_{1,actual}, G_{2,actual}, ... , G_{n,actual}) of the associated derived variable (G₁, G₂, ... , Gₙ) from a plurality of preceding moulding cycles.

8. The device according to at least one of the preceding claims, wherein at least one additional parameter (K₁, K₂..., Kᵥ) is selected from the list below:
- a target value (P_{1,target}, P_{2,target}, ... , P_{m,target}) of at least one process variable (P₁, P₂, ..., Pₘ), optionally the process variable (P₁, P₂, ..., Pₘ) in relation to which the actually present process state (Z₁, Z₂, ..., Z_{q}) is to be calculated,
- a target value (G_{1,target}, G_{2,target}, ..., G_{n,target}) of at least one derived variable (G₁, G₂, ..., Gₙ), optionally the derived variable (G₁, G₂, ..., Gₙ) in relation to which the actually present process state (Z₁, Z₂, ..., Z_{q}) is to be calculated,
- an actual value (P_{1,actual}, P_{2,actual}, ... , P_{m,actual}) of at least one process variable (P₁, P₂, ..., Pₘ) from at least one preceding cycle,
- an actual value (G_{1,actual}, G_{2,actual}, ..., G_{n,actual}) of a derived variable (G₁, G₂, ..., Gₙ) from at least one preceding cycle,
- a reference value (P_{1,ref}, P_{2,ref}, ..., P_{m,ref}) of at least one process variable (P₁, P₂, ... , Pₘ), optionally the process variable (P₁, P₂, ... , Pₘ) in relation to which the actually present process state (Z₁, Z₂, ..., Z_{q}) is to be calculated,
- a reference value (G_{1,ref}, G_{2,ref}, ..., G_{n,ref}) of at least one derived variable (G₁, G₂, ..., Gₙ), optionally the derived variable (G₁, G₂, ..., Gₙ) in relation to which the actually present process state (Z₁, Z₂, ..., Z_{q}) is to be calculated,
- a tolerance range (ΔP₁, ΔP₂, ... , ΔPₘ) of at least one process variable (P₁, P₂, ... , Pₘ), optionally the process variable (P₁, P₂, ... , Pₘ) in relation to which the actually present process state (Z₁, Z₂, ..., Z_{q}) is to be calculated,
- a tolerance range (ΔG₁, ΔG₂, ..., ΔGₙ) of at least one derived variable (G₁, G₂, ..., Gₙ), optionally the derived variable (G₁, G₂, ..., Gₙ) in relation to which the actually present process state (Z₁, Z₂, ..., Z_{q}) is to be calculated,
- an auxiliary variable, preferably a counter variable,
- a geometric parameter of the moulding machine and/or optionally of the at least one peripheral device,
- component-specific parameters of the moulding machine and/or optionally of the at least one peripheral device,
- performance data of the moulding machine and/or optionally of the at least one peripheral device,
- parameters of a raw material.

9. The device according to at least one of the preceding claims, wherein the at least one derived variable (G₁, G₂, ..., Gₙ) is calculated in relation to a value relating to a drift.

10. The device according to claim 9, wherein the at least one derived variable (G₁, G₂, ..., Gₙ) is selected from the list below:
- a value relating to a drift of a process variable (P₁, P₂, ..., Pₘ),
- a statistical coefficient of the actual values of a process variable (P₁, P₂, ..., Pₘ) of a current moulding cycle and/or of past moulding cycles.

11. The device according to one of the preceding claims, wherein the at least one algorithm (A₁, A₂, ... , At) comprises at least one hypothesis (H₁, H₂, ..., Hᵣ), wherein the at least one hypothesis (H₁, H₂, ..., Hᵣ) in relation to the actually present at least one process state (Z₁, Z₂, ... , Z_{q}) and/or the change in the at least one process state (Z₁, Z₂, ..., Z_{q}) represents a possible diagnosis in relation to a cause of the presence of the at least one process state (Z₁, Z₂, ... , Z_{q}) and/or the change in the at least one process state (Z₁, Z₂, ..., Z_{q}).

12. The device according to claim 11, wherein the possible diagnosis can be generated by the at least one hypothesis (H₁, H₂, ..., Hᵣ) on the basis of the at least one algorithm present (A₁, A₂, ... , At) and
- at least one event (E₁, E₂, ... , Eₒ)
and/or can be modified depending on at least one preceding moulding cycle.

13. The device according to one of claims 11 or 12, wherein at least one electronic message (T) can be displayed, which presents the at least one diagnosis in the form of an electronic message (T) and/or which displays the applicability and/or non-applicability of the at least one hypothesis (H₁, H₂, ... , Hᵣ) and/or the at least one process state (Z₁, Z₂, ... , Z_{q}).

14. The device according to one of claims 11 to 13, wherein at least two hypotheses (H₁, H₂, ..., Hᵣ) can be used and/or displayed in parallel for the diagnosis of the actually present at least one process state (Z₁, Z₂, ..., Z_{q}) and/or a change in the at least one process state (Z₁, Z₂, ..., Z_{q}).

15. The device according to at least one of the preceding claims, wherein the electronic message (T) is generated by the computing unit (2) in relation to at least one of the possible process states (Z₁, Z₂, ..., Z_{q}) with at least one fixed message element (8) and at least one variable message element (9), wherein it is preferably provided that the at least one variable message element (9) contains at least one numerical value of at least one process variable (P₁, P₂, ..., Pₘ) and/or at least one derived variable (G₁, G₂, ..., Gₙ) and/or at least one additional parameter (K₁, K₂, ..., Kᵥ) or a graphic representation of a temporal progression of at least one numerical value of at least one process variable (P₁, P₂, ..., Pₘ) and/or at least one derived variable (G₁, G₂, ..., Gₙ) and/or at least one additional parameter (K₁, K₂, ..., Kᵥ).

16. The device according to at least one of the preceding claims, wherein the electronic message (T) contains at least one numerical value of at least one process variable (P₁, P₂, ..., Pₘ) and/or at least one derived variable (G₁, G₂, ..., Gₙ) and/or at least one additional parameter (K₁, K₂, ..., Kᵥ).

17. The device according to at least one of the preceding claims, wherein the electronic message (T) contains a graphic representation of a temporal progression of at least one numerical value of at least one process variable (P₁, P₂, ..., Pₘ) and/or at least one derived variable (G₁, G₂, ..., Gₙ) and/or at least one additional parameter (K₁, K₂, ..., Kᵥ).

18. The device according to at least one of the preceding claims, wherein the electronic message contains at least one message element in the form of
- a plain text notification and/or
- a graphic or an image and/or
- an acoustic notification and/or
- a non-textual, visual notification.

19. A production facility (1) with a moulding machine functioning in moulding cycles and optionally at least one peripheral device and a device according to at least one of the preceding claims.

20. A computer program product, comprising commands which, when executed by a computing unit (2), prompt it, for a moulding machine functioning in moulding cycles and production facility (1) optionally containing at least one peripheral device,
- from a memory unit (4b) which is in or can be brought into data connection with the computing unit (2), in relation to at least one process variable set (P) of the production facility (1), to retrieve in each case at least three possible process states (Z₁, Z₂, ..., Z_{q}) of the production facility (1) and, in relation to each process variable set (P), to retrieve at least one algorithm (A₁, A₂, ..., At) by which, using actual values (P_{1,actual}, P_{2,actual}, ..., P_{m,actual}) of at least two process variables (P₁, P₂, ..., Pₘ) or one actual value (P_{1,actual}, P_{2,actual}, ... , P_{m,actual}) of at least one process variable (P₁, P₂, ... , Pₘ) and one actual value (G_{1,actual}, G_{2,actual}, ... , G_{n,actual}) of the respective derived variable (G₁, G₂, ... , Gₙ) and at least one additional parameter (K₁, K₂, ..., Kᵥ) which is different from the actual value (P_{1,actual}, P_{2,actual}, ... , P_{m,actual}) of the respective process variable (P₁, P₂, ... , Pₘ) and from the actual value (G_{1,actual}, G_{2,actual}, ... , G_{n,actual}) of the respective derived variable (G₁, G₂, ... , Gₙ), it can be calculated which of the possible process states (Z₁, Z₂, ... , Z_{q}) of the production facility (1) that differ in relation to the respective process variable set (P) is actually present, wherein the possible process states (Z₁, Z₂, ... , Z_{q}) that differ in relation to the respective process variable set (P) are classified according to whether measures which bring about an alteration of the respective process variable (P₁, P₂, ... , Pₘ) and/or derived variable (G₁, G₂, ..., Gₙ) are necessary or recommended, wherein, in relation to each process variable set (P), at least one process state (Z₁, Z₂, ..., Z_{q}) is classified such that no measures are necessary or recommended and at least one process state (Z₁, Z₂, ..., Z_{q}) is classified such that measures are necessary or recommended,
- to calculate the at least one derived variable (G₁, G₂, ..., Gₙ) from the actual values (P_{1,actual}, P_{2,actual}, ..., P_{m,actual}) of at least one process variable (P₁, P₂, ..., Pₘ) of a current moulding cycle and/or of past moulding cycles and optionally of the at least one additional parameter (K₁, K₂, ..., Kᵥ) and/or to relate the actual value (P_{1,actual}, P_{2,actual}, ... , P_{m,actual}) of at least one process variable (P₁, P₂, ... , Pₘ) to an actual moulding cycle and/or to a past moulding cycle
- in relation to at least one process variable set (P), to execute the associated at least one algorithm (A₁, A₂, ..., At) and thus, taking into account the actual values (P_{1,actual}, P_{2,actual}, ... , P_{m,actual}) of the at least two process variables (P₁, P₂, ..., Pₘ) or the actual value (P_{1,actual}, P_{2,actual}, ... , P_{m,actual}) of the at least one process variable (P₁, P₂, ... , Pₘ) and the actual value (G_{1,actual}, G_{2,actual}, ..., G_{n,actual}) of the respective derived variable (G₁, G₂, ... , Gₙ) and at least one additional parameter (K₁, K₂, ... , Kᵥ), to calculate which of the possible process states (Z₁, Z₂, ... , Z_{q}) that differ in relation to the respective process variable set (P) is actually present and
- to check whether the actually present process state (Z₁, Z₂, ... , Z_{q}) is classified as such a process state (Z₁, Z₂, ..., Z_{q}) for which a measure which brings about an alteration of the respective process variable (P₁, P₂, ... , Pₘ) and/or derived variable (G₁, G₂, ... , Gₙ) is necessary or recommended,
- for the case where a measure is necessary or recommended in relation to the actually present process state (Z₁, Z₂, ... , Z_{q}) because of its classification, to generate an electronic message (T) depending on the calculated process state (Z₁, Z₂, ..., Z_{q}) and to output it by means of the output device (6), wherein it is preferably provided that the electronic message (T) contains an item of information as to which of the possible process states (Z₁, Z₂, ..., Z_{q}) that differ in relation to the process variable set (P) is actually present.

21. A method for monitoring a moulding machine functioning in moulding cycles and production facility (1) optionally containing at least one peripheral device, wherein, by means of a computing unit (2),
- in relation to at least one process variable set (P) of the production facility (1), taking into account actual values (P_{1,actual}, P_{2,actual}, ... , P_{m,actual}) of at least two process variables (P₁, P₂, ..., Pₘ) or one actual value (P_{1,actual}, P_{2,actual}, ... , P_{m,actual}) of at least one process variable (P₁, P₂, ... , Pₘ) and one actual value (G_{1,actual}, G_{2,actual}, ..., G_{n,actual}) of a respective derived variable (G₁, G₂, ... , Gₙ) and at least one additional parameter (K₁, K₂, Kᵥ), it is calculated which of the possible process states (Z₁, Z₂, ... , Z_{q}) of the production facility (1) that differ in relation to the respective process variable set (P) is actually present, wherein the at least one derived variable (G₁, G₂, ..., Gₙ) is calculated from the actual values (P_{1,actual}, P_{2,actual}, ... , P_{m,actual}) of at least one process variable (P₁, P₂, ... , Pₘ) of a current moulding cycle and/or of past moulding cycles and optionally of the at least one additional parameter (K₁, K₂, ..., Kᵥ) and/or the actual value (P_{1,actual}, P_{2,actual}, ... , P_{m,actual}) of at least one process variable (P₁, P₂, ..., Pₘ) relates to an actual moulding cycle and/or to a past moulding cycle, and
- it is checked whether the actually present process state (Z₁, Z₂, ... , Z_{q}) is classified as such a process state (Z₁, Z₂, ... , Z_{q}) for which a measure which brings about an alteration of the respective process variable (P₁, P₂, ... , Pₘ) and/or derived variable (G₁, G₂, ... , Gₙ) is necessary or recommended,
- for the case where a measure is necessary or recommended in relation to the actually present process state (Z₁, Z₂, ... , Z_{q}) because of its classification, to generate an electronic message (T) depending on the calculated process state (Z₁, Z₂, ..., Z_{q}) and to output it by means of the output device (6), wherein it is preferably provided that the electronic message (T) contains an item of information as to which of the possible process states (Z₁, Z₂, ..., Z_{q}) that differ in relation to the process variable set (P) is actually present.

## Revendications

1. Dispositif de surveillance d'une machine de façonnage travaillant en cycles de façonnage et éventuellement d'au moins une installation de production (1) contenant un appareil périphérique, avec :
- une unité de calcul (2)
- au moins un capteur (3), au moyen duquel au moins une valeur réelle (P_{1,réelle}, P_{2,réelle}, ..., P_{m,réelle}) d'au moins une grandeur de processus (P₁, P₂, ..., Pₘ) de l'installation de production (1) peut être déterminée de manière continue dans le temps ou de manière discrète dans le temps, dans lequel l'au moins un capteur (3) se trouve en liaison de données ou peut être amené en liaison de données avec l'unité de calcul (2),
- une unité de mémorisation (4a), laquelle se trouve en liaison de données ou peut être amenée en liaison de données avec l'unité de calcul (2), dans lequel un programme informatique (5) contenant des instructions est stocké dans l'unité de mémorisation (4a),
- un dispositif de distribution (6), avec lequel l'unité de calcul (2) se trouve en liaison de données ou peut être amenée en liaison de données,
**caractérisé en ce que**
- sont stockés, dans une unité de mémorisation (4b), laquelle se trouve en liaison de données ou peut être amenée en liaison de données avec l'unité de calcul (2),
- - en ce qui concerne au moins un ensemble de grandeurs de processus (P), comprenant au moins deux différentes grandeurs de processus (P₁, P₂, ..., Pₘ) de l'installation de production (1) ou au moins une grandeur de processus (P₁, P₂, ..., Pₘ) avec au moins une grandeur déduite (G₁, G₂, ..., Gₙ), respectivement au moins trois états de processus (Z₁, Z₂, ..., Z_{q}) possibles de l'installation de production (1) et, en ce qui concerne chaque ensemble de grandeurs de processus (P), au moins un algorithme (A₁, A₂, ..., At), par lequel peut être calculé, en utilisant des valeurs réelles (P_{1,réelle}, P_{2,réelle}, ..., P_{m,réelle}) d'au moins deux grandeurs de processus (P₁, P₂, ..., Pₘ) ou une valeur réelle (P_{1,réelle}, P_{2,réelle}, ..., P_{m,réelle}) d'au moins une grandeur de processus (P₁, P₂, ..., Pₘ) et une valeur réelle (G_{1,réelle}, G_{2,réelle}, ..., G_{n,réelle}), d'au moins une grandeur déduite (G₁, G₂, ..., Gₙ) et au moins un paramètre supplémentaire (K₁, K₂, ..., Kᵥ), lequel est différent de la valeur réelle (P_{1,réelle}, P_{2,réelle}, ..., P_{m,réelle}) de la grandeur de processus (P₁, P₂, ..., Pₘ) respective et de la valeur réelle (G_{1,réelle}, G_{2,réelle}, ..., G_{n,réelle}) de la grandeur déduite (G₁, G₂, ..., Gₙ) respective, l'état de processus des différents états de processus (Z₁, Z₂, ..., Zₙ) possibles en ce qui concerne l'ensemble de grandeurs de processus (P) respectif, qui est réellement présent,
--les différents états de processus (Z₁, Z₂, ..., Z_{q}) possibles en ce qui concerne l'ensemble de grandeurs de processus (P) respectif sont classés pour savoir si des mesures, lesquelles entraînent une modification d'au moins une grandeur de processus (P₁, P₂, ..., Pₘ) et/ou d'au moins une grandeur déduite (G₁, G₂, ..., Gₙ), sont nécessaires ou recommandées, dans lequel en ce qui concerne chaque ensemble de grandeurs de processus (P), au moins un état de processus (Z₁, Z₂, ..., Z_{q}) est classé de telle sorte qu'aucune mesure n'est nécessaire ou n'est recommandée et au moins un état de processus (Z₁, Z₂, ..., Z_{q}) est classé de telle sorte que des mesures sont nécessaires ou recommandées,
- les instructions amènent, lorsque le programme informatique (5) est exécuté par l'unité de commande (2), celle-ci
- - en ce qui concerne l'ensemble de grandeurs de processus (P) respectif, à exécuter l'au moins un algorithme (A₁, A₂, ..., At) associé et ainsi à calculer, en utilisant des valeurs réelles (P_{1,réelle}, P_{2,réelle}, ..., P_{m,réelle}) des au moins deux grandeurs de processus (P₁, P₂, ..., Pₘ) ou la valeur réelle (P_{1,réelle}, P_{2,réelle}, ..., P_{m,réelle}) de l'au moins une grandeur de processus (P₁, P₂, ..., Pₘ) et la valeur réelle (G_{1,réelle}, G_{2,réelle}, ..., G_{n,réelle}) de l'au moins une grandeur déduite (G₁, G₂, ..., Gₙ) et l'au moins un paramètre supplémentaire (K₁, K₂, ..., Kᵥ), l'état de processus des différents états de processus (Z₁, Z₂, ..., Z_{q}) possibles de l'installation de production (1) en ce qui concerne l'ensemble de grandeurs de processus (P) respectif, qui est réellement présent, et
- - à vérifier si l'état de processus (Z₁, Z₂, ..., Z_{q}) réellement présent est classé comme étant un état de processus (Z₁, Z₂, ..., Z_{q}), pour lequel une mesure, qui entraîne une modification de l'ensemble de grandeurs de processus (P) respectif, est nécessaire ou recommandée,
- - à créer un message électronique (T) en fonction de l'état de processus (Z₁, Z₂, ..., Z_{q}) calculé et le distribuer au moyen du dispositif de distribution (6) si une mesure est nécessaire ou recommandée en ce qui concerne l'état de processus (Z₁, Z₂, ..., Z_{q}) réellement présent en raison de son classement,
dans lequel l'au moins une grandeur déduite (G₁, G₂, ..., Gₙ) est calculée à partir des valeurs réelles (P_{1,réelle}, P_{2,réelle}, ..., P_{m,réelle}) d'au moins une grandeur de processus (P₁, P₂, ..., Pₘ) d'un cycle de façonnage instantané et/ou de cycles de façonnage passés et éventuellement de l'au moins un paramètre supplémentaire (K₁, K₂, ..., Kᵥ) et/ou la valeur réelle (P_{1,réelle}, P_{2,réelle}, ..., P_{m,réelle}) de l'au moins une grandeur de processus (P₁, P₂, ..., Pₘ) se rapporte à un cycle de façonnage instantané et/ou à un cycle de façonnage passé.

2. Dispositif selon la revendication 1, dans lequel le message électronique (T) comporte une information indiquant :
- la mesure, qui est nécessaire ou recommandée et/ou
- l'état de processus des différents états de processus (Z₁, Z₂, ..., Z_{q}) possibles en ce qui concerne l'ensemble de grandeurs de processus (P), qui est réellement présent.

3. Dispositif selon l'une quelconque des revendications 1 ou 2, dans lequel au moins un paramètre supplémentaire (K₁, K₂, ..., Kᵥ) et/ou au moins une grandeur de processus (P₁, P₂, ..., Pₘ) et/ou au moins une grandeur déduite (G₁, G₂, ..., Gₙ) provenant d'au moins un cycle de façonnage précédent peuvent être pris en compte pour l'exécution de l'au moins un algorithme (A₁, A₂, ..., At).

4. Dispositif selon l'une quelconque des revendications précédentes, dans lequel l'au moins un état de processus (Z₁, Z₂, ..., Z_{q}) et/ou un changement de l'au moins un état de processus (Z₁, Z₂, ..., Z_{q}) sont affichés sous la forme du message électronique (T).

5. Dispositif selon l'une quelconque des revendications précédentes, dans lequel au moins deux algorithmes peuvent être pris en compte en parallèle pour calculer l'état de processus (Z₁, Z₂, ..., Z_{q}) réellement présent et/ou le classement de l'état de processus (Z₁, Z₂, ..., Z_{q}) réellement présent.

6. Dispositif selon l'une quelconque des revendications précédentes, dans lequel, si aucune mesure n'est nécessaire ou n'est recommandée en ce qui concerne l'état de processus (Z₁, Z₂, ..., Z_{q}) réellement présent en raison de son classement, les instructions amènent celle-ci, lorsque le programme informatique (5) est exécuté par l'unité de calcul (2), soit à ne distribuer aucun message soit à créer un message électronique (T) et le distribuer au moyen du dispositif de distribution (6), dans lequel le message électronique (T) comporte une information quant à l'état de processus des différents états de processus (Z₁, Z₂, ..., Z_{q}) possibles en ce qui concerne l'ensemble de grandeurs de processus (P) respectif, qui est réellement présent et/ou une information indiquant qu'aucune mesure n'est nécessaire ou recommandée.

7. Dispositif selon l'une quelconque des revendications précédentes, dans lequel au moins un paramètre supplémentaire (K₁, K₂, ..., Kᵥ) se rapporte à une valeur réelle (P_{1,réelle}, P_{2,réelle}, ..., P_{m,réelle}) de la grandeur de processus (P₁, P₂, ..., Pₘ) associée et/ou à une valeur réelle (G_{1,réelle}, G_{2,réelle}, ..., G_{n,réelle}) de la grandeur déduite (G₁, G₂, ..., Gₙ) associée provenant d'au moins un cycle de façonnage précédent de la machine de façonnage, dans lequel il est prévu de préférence qu'une évolution historique de la valeur réelle (P_{1,réelle}, P_{2,réelle}, ..., P_{m,réelle}) de la grandeur de processus (P₁, P₂, ..., Pₘ) associée et/ou de la valeur réelle (G_{1,réelle}, G_{2,réelle}, ..., G_{n,réelle}) de la grandeur déduite (G₁, G₂, ..., Gₙ) associée est calculée à partir d'une pluralité de valeurs réelles (P_{1,réelle}, P_{2,réelle}, ..., P_{m,réelle}) de la grandeur de processus (P₁, P₂, ..., Pₘ) associée et/ou à partir d'une pluralité de valeurs réelles (G_{1,réelle}, G_{2,réelle}, ..., G_{n,réelle}) de la grandeur déduite (G₁, G₂, ..., Gₙ) associée provenant d'une pluralité de cycles de façonnage précédents.

8. Dispositif selon au moins l'une quelconque des revendications précédentes, dans lequel au moins un paramètre supplémentaire (K₁, K₂, ..., Kᵥ) est choisi parmi la liste qui suit :
- une valeur théorique (P_{1,théorique}, P_{2,théorique}, ..., P_{m,théorique}) d'au moins une grandeur de processus (P₁, P₂, ..., Pₘ), éventuellement de cette grandeur de processus (P₁, P₂, ..., Pₘ), concernant laquelle précisément l'état de processus (Z₁, Z₂, ..., Z_{q}) réellement présent est à calculer
- une valeur théorique (G_{1,théorique}, G_{2,théorique}, ..., G_{n,théorique}) d'au moins une grandeur déduite (G₁, G₂, ..., Gₙ), éventuellement de cette grandeur déduite (G₁, G₂, ..., Gₙ), concernant laquelle précisément l'état de processus (Z₁, Z₂, ..., Z_{q}) réellement présent est à calculer
- une valeur réelle (P_{1,réelle}, P_{2,réelle}, ..., P_{m,réelle}) d'au moins une grandeur de processus (P₁, P₂, ..., Pₘ) provenant d'au moins un cycle précédent
- une valeur réelle (G_{1,réelle}, G_{2,réelle}, ..., G_{n,réelle}) d'une grandeur déduite (G₁, G₂, ..., Gₙ) provenant d'au moins un cycle précédent,
- une valeur de référence (P₁, _{ref}, P_{2, ref}, ..., P_{m,ref}) d'au moins une grandeur de processus (P₁, P₂, ..., Pₘ), éventuellement de cette grandeur de processus (P₁, P₂, ..., Pₘ), concernant laquelle précisément l'état de processus (Z₁, Z₂, ..., Z_{q}) réellement présent est à calculer
- une valeur de référence (G₁, _{ref}, G₂, _{ref}, ..., G_{n,ref}) d'au moins une grandeur déduite (G₁, G₂, ..., Gₙ), éventuellement de cette grandeur déduite (G₁, G₂, ..., Gₙ), concernant laquelle précisément l'état de processus (Z₁, Z₂, ..., Z_{q}) réellement présent est à calculer
- une plage de tolérance (ΔP₁, ΔP₂, ..., ΔPₘ) d'au moins une grandeur de processus (P₁, P₂, ..., Pₘ), éventuellement de cette grandeur de processus (P₁, P₂, ..., Pₘ), concernant laquelle précisément l'état de processus (Z₁, Z₂, ..., Z_{q}) réellement présent est à calculer
- une plage de tolérance (ΔG₁, ΔG₂, ..., ΔGₙ) d'au moins une grandeur déduite (G₁, G₂, ..., Gₙ), éventuellement de cette grandeur déduite (G₁, G₂, ..., Gₙ), concernant laquelle précisément l'état de processus (Z₁, Z₂, ..., Z_{q}) réellement présent est à calculer
- une variable d'aide, de préférence une variable de comptage
- un paramètre de géométrie de la machine de façonnage et/ou éventuellement de l'au moins un appareil périphérique,
- des paramètres spécifiques au composant de la machine de façonnage et/ou éventuellement de l'au moins un appareil périphérique
- des données de puissance de la machine de façonnage et/ou éventuellement de l'au moins un appareil périphérique
- des paramètres d'un matériau brut.

9. Dispositif selon au moins l'une quelconque des revendications précédentes, dans lequel l'au moins une grandeur déduite (G₁, G₂, ..., Gₙ) en ce qui concerne une valeur se rapportant à une dérive est calculée.

10. Dispositif selon la revendication 9, dans lequel l'au moins une grandeur déduite (G₁, G₂, ..., Gₙ) est choisie parmi la liste qui suit :
- une valeur se rapportant à une dérive d'une grandeur de processus (P₁, P₂, ..., Pₘ)
- un indice statistique des valeurs réelles d'une grandeur de processus (P₁, P₂, ..., Pₘ) d'un cycle de façonnage instantané et/ou de cycles de façonnage passés.

11. Dispositif selon l'une quelconque des revendications précédentes, dans lequel l'au moins un algorithme (A₁, A₂, ... Aₜ) comprend au moins une hypothèse (H₁, H₂, ..., Hᵣ), dans lequel l'au moins une hypothèse (H₁, H₂, ..., Hᵣ) en ce qui concerne l'au moins un état de processus (Z₁, Z₂, ..., Z_{q}) réellement présent et/ou du changement de l'au moins un état de processus (Z₁, Z₂, ..., Z_{q}) constitue un diagnostic possible en ce qui concerne une cause expliquant la présence de l'au moins un état de processus (Z₁, Z₂, ..., Z_{q}) et/ou du changement de l'au moins un état e processus (Z₁, Z₂, ..., Z_{q}).

12. Dispositif selon la revendication 11, dans lequel le diagnostic possible peut être établi par l'au moins une hypothèse (H₁, H₂, ..., Hᵣ) en raison de l'au moins un algorithme (A₁, A₂, ..., At) présent et
- d'au moins un événement (E₁, E₂, ..., Eₒ) et/ou peut être modifié en fonction d'au moins un cycle de façonnage précédent.

13. Dispositif selon l'une quelconque des revendications 11 ou 12, dans lequel au moins un message électronique (T) peut être affiché, qui constitue l'au moins un diagnostic sous la forme d'un message électronique (T) et/ou qui indique l'exactitude et/ou la non-exactitude de l'au moins une hypothèse (H₁, H₂, ..., Hᵣ) et/ou de l'au moins un état de processus (Z₁, Z₂, ..., Z_{q}).

14. Dispositif selon l'une quelconque des revendications 11 à 13, dans lequel au moins deux hypothèses (H₁, H₂, ..., Hᵣ) peuvent être prises en compte et/ou peuvent être affichées en parallèle pour le diagnostic de l'au moins un état de processus (Z₁, Z₂, ..., Z_{q}) réellement présent et/ou d'un changement de l'au moins un état de processus (Z₁, Z₂, ..., Z_{q}).

15. Dispositif selon au moins l'une quelconque des revendications précédentes, dans lequel le message électronique (T) est créé par l'unité de calcul (2) en ce qui concerne au moins un des états de processus (Z₁, Z₂, ..., Z_{q}) possibles avec au moins un élément de message fixe (8) et au moins un élément de message variable (9), dans lequel il est prévu de manière préférée que l'au moins un élément de message variable (9) contient au moins une valeur numérique d'au moins une grandeur de processus (P₁, P₂, ..., Pₘ) et/ou d'au moins une grandeur déduite (G₁, G₂, ..., Gₙ) et/ou d'au moins un paramètre supplémentaire (K₁, K₂, ..., Kᵥ) ou une représentation graphique d'une évolution dans le temps d'au moins une valeur numérique d'au moins une grandeur de processus (P₁, P₂, ..., Pₘ) et/ou d'au moins une grandeur déduite (G₁, G₂, ..., Gₙ) et/ou d'au moins un paramètre supplémentaire (K₁, K₂, ..., Kᵥ).

16. Dispositif selon au moins l'une quelconque des revendications précédentes, dans lequel le message électronique (T) contient au moins une valeur numérique d'au moins une grandeur de processus (P₁, P₂, ..., Pₘ) et/ou d'au moins une grandeur déduite (G₁, G₂, ..., Gₙ) et/ou d'au moins un paramètre supplémentaire (K₁, K₂, ..., Kᵥ).

17. Dispositif selon au moins l'une quelconque des revendications précédentes, dans lequel le message électronique (T) contient une représentation graphique d'une évolution dans le temps d'au moins une valeur numérique d'au moins une grandeur de processus (P₁, P₂, ..., Pₘ) et/ou d'au moins une grandeur déduite (G₁, G₂, ..., Gₙ) et/ou d'au moins un paramètre supplémentaire (K₁, K₂, ..., Kᵥ).

18. Dispositif selon au moins l'une quelconque des revendications précédentes, dans lequel le message électronique comporte au moins un élément de message sous la forme
- d'un message en texte clair et/ou
- d'un graphique ou d'une image et/ou
- d'un message acoustique et/ou
- d'un message non textuel, visuel.

19. Installation de production (1) avec une machine de façonnage fonctionnant en des cycles de façonnage et éventuellement au moins un appareil périphérique et un dispositif selon au moins l'une quelconque des revendications précédentes.

20. Produit de programme informatique, comprenant des instructions, qui, lorsqu'elles sont exécutées par une unité de calcul (2), amènent celle-ci à
- consulter respectivement au moins trois états de processus (Z₁, Z₂, ..., Z_{q}) possibles de l'installation de production (1) en ce qui concerne au moins un ensemble de grandeurs de processus (P) de l'installation de production (1) depuis une unité de mémorisation (4b), laquelle se trouve en liaison de données ou peut être amenée en liaison de données avec l'unité de calcul (2) et consulter, en ce qui concerne chaque ensemble de grandeurs de processus (P), au moins un algorithme (A₁, A₂, ..., At), par lequel peut être calculé, en utilisant des valeurs réelles (P_{1,réelle}, P_{2,réelle}, ..., P_{m,réelle}) d'au moins deux grandeurs de processus (P₁, P₂, ..., Pₘ) ou une valeur réelle (P_{1,réelle}, P_{2,réelle}, ..., P_{m,réelle}) d'au moins une grandeur de processus (P₁, P₂, ..., Pₘ) et une valeur réelle (G_{1,réelle}, G_{2,réelle}, ..., G_{n,réelle}) de la grandeur déduite (G₁, G₂, ..., Gₙ) respective et au moins un paramètre supplémentaire (K₁, K₂, ..., Kᵥ), lequel est différent de la valeur réelle (P_{1,réelle}, P_{2,réelle}, ..., P_{m,réelle}) de la grandeur de processus (P₁, P₂, ..., Pₘ) respective et de la valeur réelle (G_{1,réelle}, G_{2,réelle}, ..., G_{n,réelle}) de la grandeur déduite (G₁, G₂, ..., Gₙ) respective, l'état de processus des différents états de processus (Z₁, Z₂, ..., Z_{q}) possibles de l'installation de production (1) en ce qui concerne l'ensemble de grandeurs de processus (P) respectif, qui est réellement présent, dans lequel les différents états de processus (Z₁, Z₂, ..., Z_{q}) possibles en ce qui concerne l'ensemble de grandeurs de processus (P) respectif sont classés pour savoir si des mesures, lesquelles entraînent une modification de la grandeur de processus (P₁, P₂, ..., Pₘ) respective et/ou de la grandeur déduite (G₁, G₂, ..., Gₙ), sont nécessaires ou recommandées, dans lequel en ce qui concerne chaque ensemble de grandeurs de processus (P), au moins un état de processus (Z₁, Z₂, ..., Z_{q}) est classé de telle sorte qu'aucune mesure n'est nécessaire ou recommandée et au moins un état de processus (Z₁, Z₂, ..., Z_{q}) est classé de telle sorte que des mesures sont nécessaires ou recommandées
- calculer l'au moins une grandeur déduite (G₁, G₂, ..., Gₙ) à partir des valeurs réelles (P_{1,réelle}, P_{2,réelle}, ..., P_{m,réelle}) d'au moins une grandeur de processus (P₁, P₂, ..., Pₘ) d'un cycle de façonnage instantané et/ou de cycles de façonnage passés et éventuellement de l'au moins un paramètre supplémentaire (K₁, K₂, ..., Kᵥ) et/ou à rapporter la valeur réelle (P_{1,réelle}, P_{2,réelle}, ..., P_{m,réelle}) de l'au moins une grandeur de processus (P₁, P₂, ..., Pₘ) à un cycle de façonnage instantané et/ou à un cycle de façonnage passé,
- exécuter l'au moins un algorithme (A₁, A₂, ..., At) associé en ce qui concerne au moins un ensemble de grandeurs de processus (P) et calculer ainsi, en tenant compte des valeurs réelles (P_{1,réelle}, P_{2,réelle}, ..., P_{m,réelle}) des au moins deux grandeurs de processus (P₁, P₂, ..., Pₘ) ou de la valeur réelle (P_{1,réelle}, P_{2,réelle}, ..., P_{m,réelle}) de l'au moins une grandeur de processus (P₁, P₂, ..., Pₘ) et de la valeur réelle (G_{1,réelle}, G_{2,réelle}, ..., G_{n,réelle}) de la grandeur déduite (G₁, G₂, ..., Gₙ) respective et d'au moins un paramètre supplémentaire (K₁, K₂, ..., Kᵥ), l'état de processus des différents états de processus (Z₁, Z₂, ..., Z_{q}) possibles en ce qui concerne l'ensemble de grandeurs de processus (P) respectif, qui est réellement présent, et
- vérifier si l'état de processus (Z₁, Z₂, ..., Z_{q}) réellement présent est classé comme étant un état de processus (Z₁, Z₂, ..., Z_{q}) pour lequel une mesure, laquelle entraîne une modification de la grandeur de processus (P₁, P₂, ..., Pₘ) respective et/ou de la grandeur déduite (G₁, G₂, ..., Gₙ), est nécessaire ou recommandée,
- si une mesure est nécessaire ou recommandée en ce qui concerne l'état de processus (Z₁, Z₂, ..., Z_{q}) réellement présent en raison de son classement, créer, en fonction de l'état de processus (Z₁, Z₂, ..., Z_{q}) calculé un message électronique (T) et le distribuer au moyen d'un dispositif de distribution (6), dans lequel il est prévu de manière préférée que le message électronique (T) comporte une information indiquant l'état de processus des différents états de processus (Z₁, Z₂, ..., Z_{q}) possibles en ce qui concerne l'ensemble de grandeurs de processus (P), qui est réellement présent
pour une machine de façonnage fonctionnant en cycles de façonnage et éventuellement une installation de production (1) contenant un appareil périphérique.

21. Procédé de surveillance d'une machine de façonnage fonctionnant en cycles de façonnage et éventuellement d'au moins une installation de production (1) contenant un appareil périphérique, dans lequel une unité de calcul (2) permet
- de calculer, en ce qui concerne au moins un ensemble de grandeurs de processus (P) de l'installation de production (1), en tenant compte de valeurs réelles (P_{1,réelle}, P_{2,réelle}, ..., P_{m,réelle}) d'au moins deux grandeurs de processus (P₁, P₂, ..., Pₘ) ou d'une valeur réelle (P_{1,réelle}, P_{2,réelle}, ..., P_{m,réelle}) d'au moins une grandeur de processus (P₁, P₂, ...., Pₘ) et d'une valeur réelle (G_{1,réelle}, G_{2,réelle}, ..., G_{n,réelle}) d'une grandeur déduite (G₁, G₂, ..., Gₙ) respective et d'au moins un paramètre supplémentaire (K₁, K₂, Kᵥ), l'état de processus des différents états de processus (Z₁, Z₂, ..., Z_{q}) possibles de l'installation de production (1) en ce qui concerne l'ensemble de grandeurs de processus (P) respectif, qui est réellement présent, dans lequel l'au moins une grandeur déduite (G₁, G₂, ..., Gₙ) est calculée à partir des valeurs réelles (P_{1,réelle}, P_{2,réelle}, ..., P_{m,réelle}) d'au moins une grandeur de processus (P₁, P₂, ..., Pₘ) d'un cycle de façonnage instantané et/ou de cycles de façonnage passés et éventuellement de l'au moins un paramètre supplémentaire (K₁, K₂, ..., Kᵥ) et/ou la valeur réelle (P₁,_{réelle}, P_{2,réelle}, ..., P_{m,réelle}) de l'au moins une grandeur de processus (P₁, P₂, ..., Pₘ) se rapporte à un cycle de façonnage instantané et/ou à un cycle de façonnage passé, et
- de vérifier si l'état de processus (Z₁, Z₂, ..., Z_{q}) réellement présent est classé comme étant un état de processus (Z₁, Z₂, ..., Z_{q}), pour lequel une mesure, laquelle entraîne une modification de la grandeur de processus (P₁, P₂, ..., Pₘ) respective et/ou de la grandeur déduite (G₁, G₂, ..., Gₙ), est nécessaire ou recommandée,
- si une mesure est nécessaire ou recommandée en ce qui concerne l'état de processus (Z₁, Z₂, ..., Z_{q}) réellement présent en raison de son classement, de créer un message électronique (T) en fonction de l'état de processus (Z₁, Z₂, ... Z_{q}) calculé et de le distribuer au moyen d'un dispositif de distribution (6), dans lequel il est prévu de préférence que le message électronique (T) comporte une information indiquant l'état de processus des différents états de processus (Z₁, Z₂, ..., Z_{q}) possibles en ce qui concerne l'ensemble de grandeurs de processus (P), qui est réellement présent.
